# EUROPÄISCHE PATENTSCHRIFT

(11) **EP 2 254 927 B1**
(45) Veröffentlichungstag und Bekanntmachung des Hinweises auf die Patenterteilung: **02.07.2014**
(21) Anmeldenummer: 09711814.5
(22) Anmeldetag: 19.02.2009
(51) Int. Cl.: C08G 18/28, C08G 18/48

(54) **NETZ- UND DISPERGIERMITTEL, DEREN HERSTELLUNG UND VERWENDUNG**
HUMECTANT AND DISPERSANT, PRODUCTION AND USE THEREOF
AGENTS DISPERSANTS ET MOUILLANTS, LEUR FABRICATION ET LEUR UTILISATION

(30) Priorität: 22.02.2008 DE 102008010705
(43) Veröffentlichungstag der Anmeldung: 01.12.2010
(73) Patentinhaber: BYK-Chemie GmbH, 46483 Wesel (DE)
(72) Erfinder: PRITSCHINS, Wolfgang, 46487 Wesel (DE); OMEIS, Jürgen, 46286 Dorsten (DE); TEUWSEN, Hans-Josef, 47589 Uedem (DE)
(74) Vertreter: Leifert & Steffan
(86) Internationale Anmeldenummer: PCT/EP2009/001216
(87) Internationale Veröffentlichungsnummer: WO 2009/103543

(56) Entgegenhaltungen:
- WO-A-2004/104064
- US-A1- 2004 242 727

## Beschreibung

Die vorliegende Erfindung betrifft als Netzmittel, Dispergiermittel und als Dispersionsstabilisatoren geeignete Additionsverbindungen und deren Salze. Die Erfindung betrifft weiterhin Verfahren zur Herstellung dieser Additionsverbindungen, deren Verwendung als Netz- und Dispergiermittel und Dispersionsstabilisatoren für organische und anorganische Pigmente sowie Füllstoffe in organischen und wässrigen Systemen und in flüssige Systeme einarbeitbare pulver- oder faserförmige Feststoffe, die mit solchen Netzmitteln und Dispergiermitteln beschichtet sind.

Netzmittel setzen in einer Flüssigkeit gelöst oder dispergiert die Oberflächenspannung beziehungsweise Grenzflächenspannung herab und vergrößern so das Netzvermögen der Lösung. Dispergiermittel eignen sich im Allgemeinen zur Stabilisierung von Feststoffteilchen in Bindemitteln, Lacken, Pigmentpasten, Kunststoffen und Kunststoffmischungen, zur Reduktion der Viskosität solcher Systeme sowie zur Verbesserung der Fließeigenschaften. Dispersionsstabilisatoren eignen sich im Allgemeinen zur Stabilisierung bereits erzeugter Dispersionen.

Um Feststoffe in flüssige Medien einbringen zu können, sind hohe mechanische Kräfte erforderlich. Es ist üblich, Dispergiermittel einzusetzen, um die Dispergierkräfte zu erniedrigen und um den zur Deflockulierung der Feststoffteilchen notwendigen Gesamtenergieeintrag in das System und damit auch die Dispergierzeit so gering wie möglich zu halten. Bei solchen Dispergiermitteln handelt es sich um oberflächenaktive Stoffe, anionischer, kationischer oder neutraler Struktur. Diese Stoffe werden in kleiner Menge entweder direkt auf den Feststoff aufgebracht oder dem Dispergiermedium zugesetzt. Bekannt ist weiterhin, dass es auch nach vollständiger Deflockulierung der Feststoffagglomerate in Primärteilchen, nach dem Dispergierprozess zu Reagglomerationen kommen kann, wodurch der Dispergieraufwand teilweise oder vollständig zunichte gemacht wird. Als Folge der unzulänglichen Dispergierung bzw. durch Reagglomeration kommt es zu unerwünschten Effekten wie einem Viskositätsanstieg in flüssigen Systemen, einer Farbtondrift und einem Glanzverlust in Lacken und Beschichtungen sowie einer Verringerung der mechanischen Festigkeit in Kunststoffen.

Eine Vielzahl verschiedener Substanzen wird heute als Dispergiermittel für Pigmente und Füllstoffe verwendet. Neben einfachen, niedermolekularen Verbindungen wie beispielsweise Lecithin, Fettsäuren und deren Salzen und Alkylphenolethoxylaten werden auch komplexe Strukturen als Dispergiermittel eingesetzt. Hier sind es speziell amino- und amidfunktionelle Systeme, die breite Verwendung innerhalb der Dispergiermittel finden. In EP 158 406 und EP 208 041 werden beispielsweise amino- und amidfunktionelle Poly- und Oligocopolymere auf der Basis von Polyaminen und Polycaprolactonen zur Dispergierung von Pigmenten eingesetzt, bei denen alle reaktiven Aminogruppen in Amidgruppen umgewandelt sind. Diese Produkte stellen aber komplexe und schlecht reproduzierbare Reaktionsgemische dar und weisen sehr schlechte Löslichkeiten in Lösemitteln und unzulängliche Verträglichkeiten mit Bindemitteln und anderen Harzen auf.

Gute Ergebnisse lassen sich bereits mit polymeren Dispergiermittel auf der Basis von Polyisocyanaten erzielen, wie sie beispielsweise in der EP 0 154 678 A1 oder der EP 0 318 999 A2 beschrieben sind.

Die EP 0154 678 A1 beschreibt Dispergiermittel, die durch Addition von Monohydroxyverbindungen an Polyisocyanate erhalten werden. Die Monohydroxyverbindungen enthalten mindestens eine aliphatische, cycloaliphatische oder aromatische Gruppe mit mindestens einer -O- und/oder -COO- Gruppe. Bevorzugt sind die Monohydroxyverbindungen Polyester. Insbesondere werden Polyester aus aliphatischen Lactonen und aliphatischen Monoalkoholen eingesetzt. Als weitere Verbindung zur Addition an Polyisocyanate werden vorzugsweise di- oder trifunktionelle Polyethylenglykole verwendet.

In der EP 0 318 999 A2 wurden die aus der EP 0 154 678 A1 bekannten Additionsverbindungen dahingehend modifiziert, dass zusätzlich noch silikon- und/oder urethanhaltige Gruppen eingebaut werden. Die so erhaltenen Dispergiermittel sind universeller verträglich.

Die WO 2006/132910 A2 beschreibt Dispergiermittel auf Polyurethanbasis, die aus einer linearen Polyurethan-Hauptkette mit verschiedenen möglichen Seitenketten aufgebaut sind. Die beschriebenen Verbindungen sind dadurch gekennzeichnet, dass sie mindestens eine oder bevorzugt mehrere reaktive Kohlenstoff-Kohlenstoff-Doppelbindungen pro Molekül enthalten. Dadurch können die Verbindungen nach dem Dispergiervorgang entweder durch Michael-Addition von Polyaminen oder aber durch radikalische Reaktion vernetzt werden.

Aus der EP 0 335 197 A1 sind Polyisocyanat-Polyadditionsverbindungen bekannt, die als Dispergiermittel wirken. Zu deren Herstellung werden unter anderem Polyester oder insbesondere Polyethylenoxide eingesetzt.

EP 0 731 148 A2 offenbart die Verwendung von Polyisocyanat-Additionsprodukten, die hydrophile Polyetherketten aufweisen, als geeignete Dispergiermittel bei der Einarbeitung von Feststoffen in wässrige Beschichtungsmittel. Die Dispergiermittel werden aus der Umsetzung von 5 - 100 Äquivalent-% (bezogen auf die Isocyanatgruppen der Isocyanatkomponente) einer einwertigen Alkoholkomponente (B) sowie gegebenenfalls drei weiteren optionalen Komponenten mit einem Polyisocyanat hergestellt. Die einwertige Alkoholkomponente (B) besteht aus mindestens einem einwertigen Polyetheralkohol mit einem Gehalt an Ethylenoxideinheiten von 50 bis 99,5 Gew.-% der durch Anlagerung von epsilon-Caprolacton in einer Menge von bis zu 40 Gew.-% bezogen auf das Gewicht des einwertigen Alkohols modifiziert sein kann.

In EP 0 826 753 A1 werden zu EP 0 731 148 A2 vergleichbare Dispergiermittel auf lösemittelfreie Weise hergestellt. Dabei werden nun im Unterschied 0 bis 75 Äquivalent-% der Ethylenoxid-basierten monofunktionellen gegebenenfalls epsilon-Caprolacton modifizierten Polyetherkomponente (B) eingesetzt. Daneben können drei weitere optionale Komponenten mit der Isocyanatkomponente zur Reaktion gebracht werden. Auch die in der EP 0 827 973 A1 offenbarten Polymere der Pigmentformulierung enthalten hohe Anteile an Ethylenoxid im Polyalkylenoxidanteil.

Die WO 1997/26984 A1 beschreibt Reaktionsprodukte von Polyisocyanaten mit einer Komponente Y-R-X. In der Komponente Y-R-X ist die hydroxyl- oder aminofunktionelle Gruppe X derart über die Brücke R an einen stickstoffhaltigen Heterozyklus Y gebunden, dass ein Stickstoffatom des Heterozyklus mit der Brücke R ein tertiäres Amin bildet. Durch die Addition der tertiären Amine Y-R-X an Polyisocyanate werden Dispergiermittel erhalten, die in Zusammensetzungen mit hohem Feststoffgehalt eingesetzt werden.

In der US 2004/0242727 A1 werden spezielle strahlungshärtbare Dispergiermittel zur Herstellung klebefreier Tinten und Beschichtungen offenbart. Es handelt sich um die Reaktionsprodukte von Polyisocyanaten mit mindestens einer strahlungshärtbaren Komponente, bevorzugt mit (Meth)acrylaten, insbesondere Polycaprolactonacrylaten, und einer oder mehreren weiteren Komponenten.

Die US 2004/0260013 A1 offenbart Dispergiermittel mit sauren Gruppen, die aus einem linearen Polyurethan-Rückgrat aus niedermolekularen Diisocyanaten mit Seitenketten aus Poly-(C₂-C₄)alkylenoxiden bestehen. Die Alkylenoxid-Seitenketten müssen dabei mindestens zu 60, bevorzugt zu 70 oder sogar zu 80 Gew.%, bezogen auf das Gesamtgewicht der Alkylenoxide, aus Ethylenoxid-Einheiten aufgebaut sein.

Die DE 101 59 315 A1 beschreibt aus Diisocyanaten erhältliche Dispergiermittel, die einen alkylverkappten Oligoalkylenoxid-Rest enthalten. Der Oligoalkylenoxid-Rest umfasst zwingend ein oder mehrere Ethylenoxid-Gruppen und kann daneben noch einen weiteren, verzweigten Alkylrest enthalten, was jedoch nicht bevorzugt wird.

WO 2004/104064 A2 behandelt ein Dispergiermittel aus niedermolekularen Diisocyanaten für nicht-wäßrige Systeme, welches aus einem linearen Polyurethan-Rückgrat mit Polyester-, Polyether- und/oder Polyacrylat-Seitenketten aufgebaut ist.

Die oben vorgestellten Dispergiermittel stellen jedoch oft nur Teillösungen für die eingangs dargestellten Probleme dar. Viele dieser Produkte stellen aufgrund von vielen möglichen Nebenreaktionen bei ihrer Herstellung sehr komplexe und wenig definierte Reaktionsmischungen dar, mit den sich daraus ergebenden Nachteilen, wie sehr eingeschränkten Verträglichkeiten und schlechten Löslichkeiten. Daher lassen sich diese Reaktionen nur in stark verdünnten Lösungen durchführen und die Endprodukte weisen sehr niedrige Festkörpergehalte von in der Regel unter 50% und in vielen Fällen sogar nur von 20-30% auf. Die dadurch über diese Produkte eingebrachten großen Lösemittelmengen führen in modernen Beschichtungssystemen aber zu erheblichen Problemen, da im Zuge der fortschreitenden Bemühungen umweltverträgliche Systeme zu erzeugen, die Notwendigkeit besteht, die Lösungsmittelmenge soweit wie möglich zu senken (z.B. bei Pigmentkonzentraten, high-solid und ultra-high-solid Lacken), oder sogar ganz auf organische Lösungsmittel zu verzichten. Produkte, die Polyesterreste auf Basis von Hydroxycarbonsäuren beziehungsweise deren Lactonen, wie epsilon-Caprolacton und/oder delta-Valerolacton, enthalten, sind aufgrund ihrer Kristallisationsneigung problematisch und weisen Probleme mit schlechter Löslichkeit und Verträglichkeit auf. Insbesondere bei Malerlacken auf Basis von aromatenfreien Testbenzinen sind die Dispergiermittel nach dem Stand der Technik aufgrund schlechter Verträglichkeit nicht oder nur eingeschränkt verwendbar.

Aufgrund der Vielzahl der heute verwendeten anorganischen und organischen Pigmente und Füllmaterialien ist eine hinreichende Stabilisierung der zu dispergierenden Feststoffteilchen durch desorptionsstabile Belegung der Oberfläche nicht ausreichend gewährleistet. Somit kommt es zu Agglomerationen, da die notwendige effiziente sterische Abschirmung fehlt.

Aufgrund der hohen Einsatzmengen derartiger Dispergiermittel bezogen auf die zu dispergierenden Feststoffe (bei Ruß bis zu 100% Dispergiermittel bezogen auf Pigment), kommt es in der fertigen Lackschicht häufig zu Verschlechterungen bei der Zwischenschichthaftung und den Beständigkeiten, insbesondere Wasserfestigkeit, Lösemittelbeständigkeit und Kratzfestigkeit.

Der vorliegenden Erfindung liegt daher die Aufgabe zugrunde, die zuvor beschriebenen Nachteile bekannter Dispergiermittel zu beseitigen, das heißt Additive zu entwickeln, die bei guter Stabilisierung von Pigmenten oder Füllstoffen die Mahlgutviskosität der Lacke, Pasten oder Kunststoffformulierungen so weit senken, dass eine Verarbeitung bei hohem Füllgrad möglich ist, ohne dass die Beständigkeiten der ausgehärteten Lacke negativ beeinflusst werden. Gleichzeitig muss speziell bei Pigment- und Füllstoffpasten eine breite Verträglichkeit gewährleistet sein, um diese in vielen unterschiedlichen Bindemitteln und Überzugsmaterialien einsetzen zu können. Weiterhin ist es erforderlich, dass die verwendeten erfindungsgemäßen Dispergieradditive eine flockulationsfreie Mischbarkeit der Pasten, beziehungsweise der mit diesen Pasten hergestellten Bindemittel, untereinander ermöglichen.

Weiterhin sollen Dispergieradditive bereitgestellt werden, die auch als Netzmittel wirken. Schließlich sollen die bereitgestellten Additive auch als Dispersionsstabilisatoren, insbesondere als Emulsionsstabilisatoren wirken.

Desweiteren sollten durch die erfindungsgemäß zur Verfügung gestellten Additionsverbindungen die mit dem Einbau von Lactonen in die Dispergiermittel des Stands der Technik verbundenen Probleme gelöst werden. Hohe Lacton-, insbesondere Caprolactonanteile führen wie oben bereits beschrieben häufig zu teilkristallinen Verbindungen mit hoher Viskosität, was vor allem bei der Produktion von Pigment- und Füllstoffpasten die Verarbeitbarkeit nachteilig beeinflusst. Solche lactonbasierten Dispergiermittel besitzen auch die oben geschilderten Löslichkeitsprobleme. Ähnliche Nachteile sind auch für Dispergiermittel bekannt, die sehr hohe Polyethylenoxidanteile enthalten.

Weiterhin sind diese Additionsverbindungen überraschend breit sowohl in polaren wie auch in unpolaren Bindemittelsystemen einsetzbar. Sie senken die Viskosität des Mahlgutes während der Dispergierung stark und erlauben es daher Formulierungen mit hohem Feststoffanteil herzustellen.

Überraschenderweise hat es sich gezeigt, dass eine deutliche Verbesserung in den Beständigkeiten bei guter Dispergierung und Stabilisierung der Pigmente oder Füllstoffteilchen in Bindemitteln, Pigmentpasten oder Kunststoffformulierungen erreicht werden kann, wenn die nachfolgend beschriebenen erfindungsgemäßen Additionsverbindungen eingesetzt werden.

Die Lösung der Aufgabenstellung wird daher erreicht durch die Bereitstellung von Additionsverbindungen und deren Salze, welche erhältlich sind durch die Umsetzung von
(a) einem oder mehreren Polyisocyanaten mit mindestens zwei Isocyanatgruppen pro Molekül mit
(b1) einer oder mehreren Verbindungen der Formel (la)

   Y-XH (Ia)

   wobei
   XH für eine gegenüber Isocyanaten reaktive Gruppe steht und Y für eine nicht gegenüber Isocyanaten reaktive, monomere oder polymere Gruppe ohne tertiäre Aminogruppen steht, die eine oder mehrere aliphatische, cycloaliphatische und/oder aromatische Gruppen umfaßt,
   wobei die Verbindung der allgemeinen Formel (Ia) eine zahlenmittlere Molmasse Mₙ kleiner 20000 g/mol besitzt und
   wobei mindestens 55 Mol-% der Verbindungen der Formel (Ia) ein zahlenmittleres Molekulargewicht Mₙ von 150 bis 10000 g/mol besitzen und welche XH-funktionalisierte Polyalkylenoxide darstellen, deren Gehalt an Alkylenoxideinheiten mit mindestens drei Kohlenstoffatomen 40 bis 100 Mol-% bezogen auf den Gesamtgehalt an Alkylenoxideinheiten beträgt,
   unter der Vorgabe, dass 20% bis 90% der Isocyanatgruppen der Komponente (a) mit den Verbindungen der Formel (Ia) umgesetzt werden,
(b2) einer oder mehreren Verbindungen der Formel (Ib)

   G-(XH)ₙ (Ib)

   wobei n für 2 bis 4 steht, und G eine mindestens 2 Kohlenstoffatome enthaltende aliphatische, cycloaliphatische und/oder aromatische Gruppe ohne tertiäre Aminogruppen mit zahlenmittlerem Molekulargewicht Mₙ von höchstens 3000 darstellt, die -O-, -COO-, - CONH-, -S-, und/oder -SO₂-Gruppe enthalten kann, in einer solchen Menge umgesetzt werden, dass 0 bis 60 %, vorzugsweise 0 bis 45 % und besonders bevorzugt 0 bis 40 % der NCO-Gruppen der ursprünglich eingesetzten Polyisocyanate umgesetzt werden,
unter der Maßgabe, dass durch die Umsetzungen (b1) und (b2) insgesamt mindestens 20 % und maximal 90 %, vorzugsweise 30 bis 65 % und besonders bevorzugt 40 bis 60 % der Isocyanatgruppen der ursprünglich eingesetzten Polyisocyanate umgesetzt sind, und
(c1) einer oder mehreren Verbindungen der allgemeinen Formel (IIa)

   Z-Q (IIa)

   worin Q für -NH₂, -NHR oder OH, worin R für eine lineare oder verzweigte Alkylgruppe mit 1 bis 18 Kohlenstoffatomen steht, und
   Z einen organischen basischen Rest mit mindestens einer tertiären Aminogruppe, der keine gegenüber Isocyanat reaktiven Gruppen enthält, darstellt, und
(c2) optional einer oder mehrerer Verbindungen der allgemeinen Formel (IIb)

   M-Q (IIb)

   worin Q für -NH₂, -NHR oder OH, worin R für eine lineare oder verzweigte Alkylgruppe mit 1 bis 18 Kohlenstoffatomen steht, und
   M einen organischen Rest mit einer zahlenmittleren Molmasse von maximal 1000 g/mol mit mindestens einer tertiären Aminogruppe und mindestens einer Hydroxylgruppe darstellt,
unter der Maßgabe, dass mindestens 10 % der Isocyanatgruppen der Komponente (a) mit Komponente (c1) umgesetzt werden.

### Komponente (a)

Für die Herstellung der erfindungsgemäßen Additionsverbindungen werden als Komponente (a) Polyisocyanate mit mindestens zwei Isocyanatgruppen pro Molekül eingesetzt. Derartige Isocyanate sind auf dem vorliegenden technischen Gebiet aus dem Stand der Technik bekannt.

Es handelt sich dabei besonders bevorzugt um Biuret-, Urethan-, Uretdion- und/oder Isocyanuratgruppen aufweisende oligomere oder polymere Derivate von monomeren Diisocyanaten. Derartige monomere Diisocyanate sind zum Beispiel 1,4-Diisocyanatobutan, Hexamethylendiisocyanat (HDI), 2-Methyl-1,5-diisocyanatopentan, 1,5-Diisocyanato-2,2-dimethylpentan, 2,2,4- oder 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethyl-cyclohexan (Isophorondiisocyanat, IPDI), 4,4'-Diisocyanatodicyclohexylmethan, Toluylendiisocyanat (TDI), 1-Isocyanato-1-methyl-4(3)isocyanatomethylcyclohexan, Bis-(isocyanatomethyl)-norbornan und 1,3- und 1,4-Bis-(2-isocyanato-prop-2-yl)-benzol (TMXDI) oder Mischungen solcher Diisocyanate. Die genannten monomeren Isocyanate können jedoch auch als solche alleine oder in Mischung oder in Mischung mit deren Biuret-, Urethan-, Uretdion-und/oder Isocyanuratgruppen aufweisenden oligomeren oder polymeren Derivaten eingesetzt werden. Erfindungsgemäß können ein oder mehrere monomere, oligomere oder polymere Polyisocyanate verwendet werden.

Die Polyisocyanate müssen eine mittlere Funktionalität von mindestens 2 besitzen. Vorzugsweise beträgt die mittlere Funktionalität mindestens 2,5 und besonders bevorzugt mindestens 3. Besonders bevorzugt werden die oben beschriebenen Derivate von HDI, TDI und/oder IPDI und insbesondere solche des TDI.

Beispiele für derartige Polyisocyanate sind solche, die beispielsweise durch Addition von Diisocyanaten an Polyole erhalten werden können wie Desmodur L der Firma Bayer oder die durch Biuretreaktion aus Diisocyanaten erhalten werden können wie das Handelsprodukt: Desmodur N der Firma Bayer oder aber die durch Cyclisierung von Diisocyanaten erhältlichen Polyisocyanate mit Isocyanurat Grundstruktur wie die Handelsprodukte Desmodur HL und Desmodur IL der Firma Bayer, die Handelsprodukte Polurene KC oder Polurene HR der Firma SAPICI, oder trimeres Isophorondiisocyanat (Isocyanurat T1890 der Firma Chemische Werke Hüls). Weitere Beispiele für als Handelsprodukte erhältliche Polyisocyanate sind Desmodur VL (Polyisocyanat auf Basis Diphenylmethandiisocyanat (MDI), Bayer AG), Desmodur Z 4370 (Polyisocyanat auf Basis Isophorondiisocyanat (IPDI), Bayer AG), Desmodur N3400 (Aliphatisches HDI-Uretdion, Bayer AG), Thanecure T9 (Aromatisches TDI-Uretdion, TSE Industries), Crelan VP LS 2147 und Crelan VP LS 2347 (Aliphatische IDPI-Uretdione, Bayer AG), Polurene KD (Polyisocyanurat auf Basis Toluylendiisocyanat (TDI), SAPICI), Uronal RA.50 (Polyisocyanurat auf Basis TDI der Firma Galstaff), Polurene A (Polyisocyanat auf Basis TDI-Trimethylolpropan (TMP), SAPICI), Polurene MC (Polyisocyanat auf Basis TMP-IPDI, SAPICI), Polurene MD.70 (Polyisocyanat auf Basis TMP-TDI-MDI, SAPICI). Diese Handelsprodukte liegen häufig nicht in reiner Form eines Polyisocyanats vor, sondern als Gemische von Polyisocyanaten ähnlicher Struktur. Bevorzugt werden als Polyisocyanate in der vorliegenden Erfindung Trimerisierungsprodukte, d. h. ein oder mehrere lsocyanuratgruppen enthaltende Produkte von Diisocyanaten auf Basis von Hexamethylendiisocyanat (HDI), lsophorodiisocyanat (IPDI) und/oder Toluylendiisocyanat (TDI) eingesetzt.

Unter der oben genannten "mittleren Funktionalität von mindestens 2" wird verstanden, dass die Handelsprodukte hinsichtlich der Isocyanatgruppen die angegebene Funktionalität von mindestens 2 aufweisen. Beispielsweise bedeutet "Funktionalität von 3", dass ein Molekül im statistischen Mittel 3 freie Isocyanatgruppen enthält.

Die mittlere Funktionalität kann man experimentell dadurch ermitteln, dass man das zahlenmittlere Molekulargewicht Mₙ und die NCO-Zahl, wie im Beispielteil der vorliegenden Anmeldung beschrieben, bestimmt und daraus das NCO-Äquivalentgewicht berechnet. Die mittlere Funktionalität ist der Quotient aus dem zahlenmittleren Molekulargewicht und dem NCO-Äquivalentgewicht. Vorzgusweise liegt das mittlere Molekulargewicht der Polyisocyanate bei mindestens 200, bevorzugt bei mindestens 300, besonders bevorzugt mindestens 500. Bevorzugt liegt die mittlere Funktionalität bei 2,5 bis 10, besonders bevorzugt bei mindestens 3 wie beispielsweise 3 bis 6.

### Komponente (b1)

Die Polyisocyanate der Komponente (a) werden erfindungsgemäß mit Verbindungen der Komponente (b1) der obigen Formel (Ia) umgesetzt.

Die Verbindungen der Formel (Ia) sind dadurch gekennzeichnet, dass sie genau eine gegenüber Isocyanatgruppen reaktive Gruppe XH enthalten. Die Verbindungen der Formel (Ia) reagieren über ihre reaktive XH-Gruppe irreversibel mit den Isocyanaten.

Für die Y-Gruppe der Verbindung der allgemeinen Formel (Ia) gilt, dass diese nicht gegenüber Isocyanaten reaktiv ist, das heißt, dass diese keine aktiven Wasserstoffatome nach Zerewitinoff enthalten. Dies bedeutet insbesondere, dass die Gruppe Y frei von den oben genannten Gruppen XH ist.

Beispiele für XH sind OH, NH₂, NHR, SH oder COOH_{,} wobei R für eine verzweigte oder unverzweigte Alkylgruppe mit 1 bis 18 Kohlenstoffatomen steht. Bevorzugt steht XH für OH, NH₂ oder NHR. Besonders bevorzugt sind diese funktionellen Gruppen Hydroxylgruppen, weil diese Verbindungen leicht zugänglich und/oder im Handel erhältlich sind und die erhaltenen Reaktionsprodukte gut löslich in Lösungsmitteln sind, die beim späteren Einsatz der Additive gemäß der Erfindung zur Anwendung kommen.

Die gegenüber Isocyanaten nicht reaktiven Gruppen Y können die Heteroatome O, S, Si und/oder N aufweisen und/oder Ether-, Urethan-, Carbonat-, Amid- und/oder Estergruppen enthalten. Gegebenenfalls ist in den Gruppen Y Wasserstoff gegen Halogen, vorzugsweise Fluor und/oder Chlor substituiert.

Als Verbindungen der Formel (la) können aliphatische, cycloaliphatische und/oder araliphatische Verbindungen eingesetzt werden. Es können auch Gemische solcher Verbindungen, das heißt mindestens zwei verschiedene Verbindungen der Formel (Ia) eingesetzt werden. Die aliphatischen oder araliphatischen Verbindungen der Formel (Ia) können gradkettig oder verzweigt sein. Sie können gesättigt oder ungesättigt vorliegen. Gesättigte Verbindungen sind jedoch bevorzugt.

Beispiele für Verbindungen der Formel (la) sind geradkettige oder verzweigte Alkohole wie Methanol, Ethanol, Butanol, Ethylhexanol, Decanol, Isotridecylalkohol, Laurylalkohol, Stearylalkohol, Isobornylalkohol, Benzylalkohol, Propargylalkohol, Oleylalkohol, Linoleylalkohol, Oxoalkohole, Neopentylalkohol Cyclohexanol, Fettalkohole, Alkylphenole, Monophenyldiglykol, Alkylnaphthole, Phenylethanol, hydroxyfunktionelle Vinylverbindungen wie zum Beispiel Hydroxybutylvinylether, hydroxyfunktionelle Acrylate oder Methacrylate wie zum Beispiel Hydroxyethylacrylat, Hydroxyethylmethacrylat, Hydroxybutyl(meth)acrylat sowie Polyolefinpolyole wie gegebenenfalls hydrierte, hydroxyfunktionelle Polybutadiene, Polypropylene, Ethylen/Butylen-Copolymere oder Polystyrole mit einer mittleren Funktionalität von 1 bis 3. Beispiele für entsprechende Handelsprodukte sind die unter der Bezeichnung Polytail® von Mitsubishi Chemical erhältlichen hydroxyterminierten hydrierten Polybutadiene oder die hydroxyterminierten Ethylen/Butylen-Copolymere Kraton® Liquid L-1203, L-1302 und L-2203 von Kraton Polymers oder die als NISSO-PB erhältlichen flüssigen Polybutadiene von Nippon Soda Co. oder die von Baker Petrolite als Unilin® Alcohols erhältlichen gesättigten, langkettigen, linearen, weitgehend primären Alkohole mit Kettenlängen bis zu C₅₀ und Molekulargewichten von 375 bis 700 g/mol und deren unter der Bezeichnung Unithox® erhältlichen Ethoxylate. Weitere Beispiele sind unter anderem in der EP-A-154 678 beschrieben. Von den vorgenannten Hydroxyverbindungen sind solche bevorzugt, die keine polymerisierbaren Doppelbindungen enthalten.

Als Verbindungen der Formel (Ia) können auch solche eingesetzt werden, die Ester, Ether, Urethan, Carbonat, Amid und/oder Siloxan-Gruppen oder Kombinationen dieser Gruppen enthalten. Es kann sich also zum Beispiel um Polyether, Polyester, Polyurethane, Polycarbonate, Polysiloxane oder zum Beispiel gemischte Polyether-Polyester handeln.

Polyester können zum Beispiel durch Umsetzung von Dicarbonsäuren sowie deren veresterbaren Derivaten wie beispielsweise Anhydriden, Säurechloriden oder Dialkylestern wie Dimethylestern oder Diethylestern durch Umsetzung mit Diolen und monofunktionellen Startkomponenten hergestellt werden. Die Veresterung kann in Substanz oder auch durch azeotrope Veresterung in Anwesenheit eines Schleppmittels durchgeführt werden. Beispiele für Dicarbonsäuren sind Bernsteinsäure, Maleinsäure, Fumarsäure, Glutarsäure, Adipinsäure, Sebacinsäure, Pimelinsäure, Phthalsäure oder dimerisierte Fettsäuren und deren Isomere und Hydrierungsprodukte. Beispiele für Diole sind: Ethylenglykol, 1,2-Propandiol, 1,3-Propandiol, 1,4-Butandiol, 1,6-Hexandiol, Neopentylglykol, cis-1,2-Cyclohexandimethanol, trans-1,2-Cyclohexandimethanol, sowie Polyglykole auf Basis von Ethylenglykol und/ oder Propylenglykol.

Polyester der Formel (Ia) können auch solche sein, die durch Polykondensation einer oder mehrerer, gegebenenfalls alkylsubstituierter, Hydroxycarbonsäuren und/oder Ringöffnungspolymerisation der korrespondierenden Lactone wie zum Beispiel Propiolacton, Valerolacton, Caprolacton mittels einer Monohydroxy-Startkomponente, wie in EP-A-154 678 (US-A-4 647 647) beschrieben, erhalten werden können. Werden diese eingesetzt, so besitzen sie vorzugsweise ein zahlenmittleres Molekulargewicht Mₙ von 150 bis 5000 g/mol. Als Startkomponente sind im Prinzip alle anderen als Verbindungen der Formel (Ia) aufgeführten Verbindungen einsetzbar. Die als Startkomponente verwendeten monofunktionellen Alkohole besitzen vorzugsweise 1 bis 30, besser noch 4 bis 14 Kohlenstoffatome. Beispielhaft genannt sind n-Butanol, längerkettige, gesättigte und ungesättigte Alkohole wie Propargylalkohol, Oleylalkohol, Linoleylalkohol, Oxoalkohole, Cyclohexanol, Phenylethanol, Neopentylalkohol, Ethylenglykol, Propylenglykol und Glycerin, aber auch fluorierte Alkohole, hydroxyfunktionelle Polydialkylsiloxane, hydroxyfunktionelle Vinylverbindungen wie zum Beispiel Hydroxybutylvinylether, hydroxyfunktionelle Acrylate oder Methacrylate wie zum Beispiel Hydroxyethylacrylat, Hydroxyethylmethacrylat, Hydroxybutyl(meth)acrylat, Hydroxyfunktionelle polyalkylenglykolacrylate und -methacrylate. Es können auch Alkohole der zuvor beschriebenen Art und substituierte und unsubstituierte Phenole durch Alkoxylierung nach bekannten Verfahren mit Alkylenoxiden wie zum Beispiel Ethylenoxid, Propylenoxid, Butylenoxid und/oder Styroloxid in Polyoxyalkylenmonoalkyl-, Polyoxyalkylenmonoaryl-, Polyoxyalkylenmonoaralkyl- und Polyoxyalkylenmonocycloalkylether überführt werden und diese Hydroxypolyether in der vorbeschriebenen Art als Startkomponente für die Lactonpolymerisation eingesetzt werden. Es können auch jeweils Gemische der vorgenannten Verbindungen eingesetzt werden z.B. Lactonmischungen, beispielsweise aus ε-Caprolacton und δ-Valerolacton. Die Lactonpolymerisation wird nach bekannten Verfahren, initiiert durch beispielsweise BF₃, p-Toluolsulfonsäure oder Dibutylzinndilaurat, bei Temperaturen von etwa 70° C bis 180°C durchgeführt. Vorzugsweise enthält Komponente (b1) jedoch weniger als 35 Mol-% an Verbindungen der Formel (Ia), die einpolymerisierte Lactone oder deren Hydroxycarbonsäure-Analoga enthalten. Besonders bevorzugt ist deren Anteil kleiner 20 Mol%. Ganz besonders bevorzugt enthält Komponente (b1) keine Verbindungen der allgemeinen Formel (Ia), die einpolymerisierte Lactone oder deren Hydroxycarbonsäure-Analoga enthalten.

Bevorzugte Verbindungen der Formel (Ia) sind hydroxyfunktionelle Polyether, hydroxyfunktionelle Polyester, hydroxyfunktionelle Polyether-Polyester und/oder aliphatische und/oder cycloaliphatische Alkohole mit 2 bis 30 Kohlenstoffatomen, deren Wasserstoffatome gegebenenfalls teilweise durch Halogen und/oder Arylreste ersetzt sind.

Als Verbindungen der Formel (Ia) können auch monofunktionelle Polysiloxane wie zum Beispiel monoamino- oder monohydroxyfunktionelle Polydialkylsiloxane, die nicht an Siliciumatome gebundene Hydroxylgruppen enthalten oder Aminoalkylpolysiloxane verwendet werden, die gegebenenfalls polyether- und/oder polyestermodifiziert sein können. Die jeweiligen aminofunktionellen Verbindungen tragen dabei primäre oder sekundäre, nicht jedoch tertiäre Aminogruppen. Bevorzugt werden Hydroxyalkylpolydimethylsiloxane mit zahlenmittleren Molekulargewichten Mₙ von 400 bis 8000 g/mol, besonders bevorzugt 400 bis 5000 g/mol und ganz besonders bevorzugt 400 bis 2000 g/mol eingesetzt.

Als Verbindungen der Formel (Ia) können auch Polyurethane, Polyether-Polyurethane, Polyester-Polyurethane und/oder Polyether-Polyester-Polyurethane eingesetzt werden, die durch Additionsreaktion von Diisocyanaten mit Dihydroxyverbindungen in Anwesenheit von monofunktionellen Startkomponenten erhalten werden können.

Als Diisocyanat zum Aufbau der urethangruppenhaltigen Verbindungen der Formel (Ia) können die aus der Polyurethanchemie an sich bekannten aliphatischen, cycloaliphatischen und/oder aromatischen Diisocyanate mit 4 bis 15 Kohlenstoffatomen eingesetzt werden, wie Tetramethylendiisocyanat, Hexamethylendiisocyanat, Trimethylhexamethylendiisocyanat, Dodekamethylendiisocyanat, Isophorondiisocyanat, Toluylendiisocyanat, Diphenylmethandiisocyanat, Methylenbis(-4-cyclohexylisocyanat) oder 1,4-Cyclohexanbis(methylisocyanat). Als Hydroxyverbindungen zum Aufbau der urethangruppenhaltigen Verbindungen nach Formel (Ia) werden bevorzugt Diole mit 2 bis 12 Kohlenstoffatomen, Polyoxyalkylenglykole und dihydroxyfunktionelle Polyester mit bevorzugten zahlenmittleren Molekulargewichten Mₙ von höchstens 2000 g/mol eingesetzt. Als monohydroxyfunktionelle Startkomponente können Alkohole mit bis zu 30 Kohlenstoffatomen, wie sie bereits zur Herstellung der Polyester nach Formel (Ia) beschrieben sind, aber auch die als Verbindung nach Formel (Ia) beschriebenen Hydroxypolyester und Hydroxypolyether eingesetzt werden. Die Polyester haben bevorzugt ein zahlenmittleres Molekulargewicht Mₙ von 300 bis 5000 g/mol und die Polyether von 200 bis 2000 g/mol.

Der Rest Y kann auch Carbonatgruppen enthalten, wie sie durch Umsetzung nach dem Stand der Technik mit offenkettigen und/oder cyclischen Carbonaten erhalten werden. Geeignet sind zum Beispiel mit Carbonaten modifizierte lineare Polyester oder Polycarbonatdiole, wie sie in der Polyurethanherstellung verwendet werden. Beispiele sind beschrieben in US 410 152 9, EP 0358 555, oder WO 02/085507. Geeignete Carbonate sind zum Beispiel aliphatische, cycloaliphatische, araliphatische und/oder aromatische Kohlensäurester wie zum Beispiel Dialkylcarbonate wie Dimethylcarbonat, Diethylcarbonat oder Diphenylcarbonat, Catecholcarbonat oder cyclische Alkylencarbonate. Besonders geeignet sind cyclische Alkylencarbonate mit 5 oder 6-gliedrigen Ringen, die gegebenenfalls substituiert sein können. Als Substituenten sind aliphatische, cycloaliphatische und/oder aromatische Gruppen mit bis zu 30 Kohlenstoffatomen bevorzugt. Beispiele für geeignete cyclische Alkylencarbonate sind Ethylencarbonat, Propylencarbonat, Glycerincarbonat, Trimethylencarbonat, 4-Methyltrimethylencarbonat, 5-Methyltrimethylencarbonat, 5,5-Dimethyltrimethylencarbonat, 5,5-Diethyltrimethylencarbonat oder 5-Methyl-5-propyltrimethylencarbonat.

Der Rest Y kann weitere Gruppen tragen, die sich bei der Bildung des Additionsproduktes inert verhalten wie beispielsweise die Carbonsäureamidgruppe (-NHCO-), nicht aktivierte Doppelbindungen oder Harnstoffgruppierungen (-NHCONH-). Der Anteil der Verbindungen der Formel (Ia), die solche Gruppen tragen sollte bezogen auf alle eingesetzten Verbindungen der Formel (la) vorzugsweise unter 40 mol%, bevorzugt unter 5 mol% liegen. Besonders bevorzugt sind Verbindungen, die gar keine dieser Gruppen enthalten.

Die gegebenenfalls vorhandenen Ester, Ether, Urethan, Carbonat und/oder Siloxan-Gruppen können in Blockstruktur vorliegen (beispielsweise Poly(ethylenoxidblock-propylenoxydblock-epsilon-caprolacton), einen Gradienten bilden oder auch statistisch angeordnet ist.

Als Verbindung der Formel (Ia) können auch Polyacrylsäureester und/oder Polymethacrylsäureester mit im Mittel einer gegenüber Isocyanat reaktiven Gruppe eingesetzt werden, wie sie durch anionische, kationische oder radikalische Polymerisation von Acrylsäureestern beziehungsweise Methacrylsäureestern erhalten werden. Bevorzugt sind monohydroxyfunktionelle Verbindungen. Monohydroxyfunktionelle Polyacrylsäureester bzw. Polymethacrylsäureester sind solche, die im Mittel eine Hydroxylgruppe im Molekül enthalten. Solche Verbindungen sind auf diesem Gebiet der Technik bereits zur Herstellung von anderen Dispergiermitteln verwendet worden, wie sie beispielsweise in der US-A-4 032 698 oder EP 318 999 beschrieben sind. Diese Polyacrylate haben vorzugsweise ein zahlenmittleres Molekulargewicht Mₙ von 300 bis 20000 g/mol, bevorzugter 500 bis 10000 g/mol. Sie können in Blockstruktur oder auch statistisch angeordnet sein oder einen Gradienten bilden.

Die Carboxylgruppe der monomeren Acrylate bzw. Methacrylate kann beispielsweise verestert sein mit aliphatischen, cycloaliphatischen und/oder aromatischen Alkoholen wie Methanol, Butanol, Cyclohexanol, 2-Ethylhexanol, Laurylalkohol, Stearylalkohol, lsobornylalkohol, Benzylalkohol, oder mit Etheralkoholen wie 2-Methoxyethanol, 2-Phenoxyethanol, Tetrahydrofurfurylalkohol oder Glycidol, mit Polyesteralkoholen wie hydroxyfunktionellem Polycaprolacton, oder mit Alkoxypolyalkylenglykolen wie Methoxypolyethylenglykol oder Methoxypolypropylenglykol verestert sein. Als Alkoxypolyalkylenglykole sind Methoxypolypropylenglykole bevorzugt. Das zahlenmittlere Molekulargewicht Mₙ der Veresterungskomponente liegt dabei vorzugsweise unter 2000 g/mol. Zur Herstellung der hydroxyfunktionellen Polyacrylate bzw. Polymethacrylate können auch Mischungen verschiedener vorstehend beschriebener Monomere eingesetzt werden. Zur Herstellung dieser Polyacrylate bzw. Polymethacrylate können als Comonomere auch Vinylester wie Vinylacetat, Vinylether wie Vinylethylether, Styrol, Vinyltoluol und/oder Vinylcyclohexan verwendet werden. Die so erhaltenen Copolymere wurden dabei aus vorzugsweise nicht mehr als 50 Mol % an nicht acrylfunktionellen Comonomeren synthetisiert.

Als Verbindung der Formel (Ia) können auch hydroxyfunktionelle Poly-2-alkyl-2-oxazoline oder Poly-2-alkyl-2-oxazine fungieren. Bevorzugt werden monohydroxyfunktionelle Verbindungen eingesetzt. Poly-2-alkyl-2-oxazoline oder Poly-2-alkyl-2-oxazine werden, wie dem Fachmann bekannt, durch kationische, ringöffnende Polymerisation von 2-Alkyl-2-oxazolinen oder 2-alkyl-2-oxazinen mit Initiatoren wie beispielsweise para-Toluolsulfonsäure, Methyltosylat oder Methyltriflat, erhalten. Die durch den lebenden kationischen Polymerisationsmechanismus resultierenden Oxazolinium- oder Oxaziniumendgruppen können durch alkalische Hydrolyse über Aminoesterendgruppen in die stabileren Hydroxyamide überführt werden. Ein alternativer Weg zur Herstellung von monohydroxyfunktionellen Poly-2-alkyl-2-oxazolinen oder Poly-2-alkyl-2-oxazinen ist die Polymerisation mit 2-(4-hydroxyphenyl)-N-methyl-2-oxazoliniumtrifluormethansulfonat als initiierender Spezies. (A. Groß, G. Maier, O. Nuyken, Macromol. Chem. Phys. 197, 2811-2826 (1996)). Durch Wahl des Alkylsubstituenten lässt sich die Verträglichkeit steuern, so ist beispielsweise Poly-2-ethyl-2-oxazolin durch seine Wasserlöslichkeit für hochpolare Systeme geeignet, während beispielsweise Poly-2-lauryl-2-oxazolin in unpolaren Systemen verträglich ist. Werden Blockcopolymere aus 2-Ethyl-2-oxazolin und 2-Lauryl-2-oxazolin gebildet, so zeichnen sich die Polymere durch eine besonders breite Verträglichkeit aus. Solche Poly-2-alkyl-2-oxazoline oder Poly-2-alkyl-2-oxazine besitzen vorzugsweise ein zahlenmittleres Molekulargewicht Mₙ von 300 bis 20000 g/mol, bevorzugter 500 bis 10000 g/mol.

Als Verbindungen der Formel (Ia) können auch mono-XH-funktionelle Polyalkylenoxide eingesetzt werden. Diese können zum Beispiel durch Alkoxylierung der anderen als Verbindungen der Formel (Ia) beschriebenen Verbindungen wie beispielsweise Alkanolen, Cycloalkanolen, Phenolen oder den vorstehend beschriebenen Hydroxypolyestern mit Alkylenoxiden wie Ethylenoxid, Propylenoxid, Butylenoxid, Styroloxid oder Mischungen davon erhalten werden. Im Falle von gemischten Polyethern können diese statistisch, als Gradient oder in Blöcken angeordnet sein. Diese Polyether haben zweckmäßig ein zahlenmittleres Molekulargewicht (Mₙ) im Bereich von etwa 100 bis 10000, bevorzugt von 150 bis 5000 und besonders bevorzugt von 200 bis 3500 g/mol. Bevorzugt sind Polyether auf Basis von Ethylenoxid, Propylenoxid sowie Butylenoxid und deren Mischungen. Weiter bevorzugt sind monohydroxyfunktionelle Polyoxyalkylenmonoalkohole wie Allylpolyether wie beispielsweise Polyglykol A 350, Polyglykol A 500, Polyglykol A 1100, Polyglykol A 11-4, Polyglykol A 20-10 oder Polyglykol A 20-20 der Clariant AG oder Pluriol^{®} A 010 R, Pluriol^{®} A 11 RE, Pluriol^{®} A 13 R, Pluriol^{®} A 22 R oder Pluriol^{®} A 23 R der BASF AG, Vinylpolyether wie beispielsweise Polyglykol V 500, Polyglykol V 1100 oder Polyglykol V 5500 der Clariant AG, Methanol gestartete Polyoxyethylenmonoalkohole wie beispielsweise Pluriol^{®} A 350 E, Pluriol^{®} A 500 E, Pluriol^{®} A 750 E, Pluriol^{®} A 1020 E, Pluriol^{®} A 2000 E oder Pluriol^{®} A 5010 E der BASF AG, Alkanol gestartete Polyoxypropylenmonoalkohole wie z.B. Polyglykol B01 / 20, Polyglykol B01 / 40, Polyglykol B01 / 80, Polyglykol B01 / 120 oder Polyglykol B01 / 240 der Clariant AG oder Pluriol^{®} A 1350 P oder Pluriol^{®} A 2000 P der BASF AG, und mit verschiedenen Fettalkoholen gestarteten Polyalkoxylate mit variablem Alkoxylierungsgrad, wie sie dem Fachmann unter den Handelsnamen Lutensol^{®} A, Lutensol^{®} AT, Lutensol^{®} AO, Lutensol^{®} TO, Lutensol^{®} XP, Lutensol^{®} XL, Lutensol^{®} AP und Lutensol^{®} ON der BASF AG bekannt sind. Bevorzugt werden Polyoxyalkylenmonoalkohole verwendet, die Ethylenoxid- und/oder Propylenoxid-und/oder Butylenoxidgruppen enthalten und gegebenenfalls mit Styroloxid modifiziert sind. Besonders bevorzugt ist die Verwendung von Polyoxyalkylenmonoalkoholen wie beispielsweise Polyglykol B 11/50, Polyglykol B 11/70, Polyglykol B 11/100, Polyglykol B 11/150, Polyglykol B 11/300 oder Polyglykol B 11/700 von der Clariant AG, Pluriol^{®} A 1000 PE, Pluriol^{®} A 1320 PE, oder Pluriol^{®} A 2000 PE der BASF AG oder Terralox WA 110 von DOW Chemicals, bei denen es sich um Butanol gestartete Polyoxyalkylene aus Ethylen- und Propylenoxid mit einer terminalen OH-Gruppe handelt. Von den vorgenannten Verbindungen sind solche bevorzugt, die keine polymerisierbaren Doppelbindungen enthalten.

Komponente (b1) muss mindestens 55 Mol-%, vorzugsweise mindestens 75 Mol% und besonders bevorzugt 100 Mol-% an Verbindungen der allgemeinen Formel (la) enthalten, die XH-funktionalisierte Polyalkylenoxide sind und ein zahlenmittleres Molekulargewicht Mₙ von 150 bis 10000 g/mol, vorzugsweise mindestens 300 g/mol, besonders bevorzugt mindestens 600 g/mol und ganz besonders bevorzugt mindestens 1000 g/mol besitzen. Die obere Grenze für das maximale Molekulargewicht Mₙ liegt bevorzugt bei maximal 5000 g/mol, besonders bevorzugt bei maximal 3000 g/mol und ganz besonders bevorzugt bei maximal 2000 g/mol. Diese Verbindungen müssen einen Gehalt an Alkylenoxideinheiten mit mindestens drei Kohlenstoffatomen von 40 bis 100 Mol-%, vorzugsweise mindestens 55 Mol-%, besonders bevorzugt mindestens 60 Mol-%, ganz besonders bevorzugt mindestens 65 Mol-% und in einer besonders bevorzugten Ausführungsform 100 Mol-% bezogen auf den Gesamtgehalt an Alkylenoxideinheiten enthalten. Die Alkylenoxideinheiten mit mindestens drei Kohlenstoffatomen leiten sich vorzugsweise von Propylenoxid und Butylenoxid ab. Besonders bevorzugt ist der Einsatz von Polypropylenoxidbasierten Verbindungen, und ganz besonders bevorzugt sind Butanolgestartete monohydroxyfunktionelle Polypropylenoxide. Als Comonomer mit weniger als drei Kohlenstoffatomen kommt Ethylenoxid in Frage. Diese Verbindungen werden wie im vorangegangenen Abschnitt beschrieben vorzugsweise durch Alkoxylierung von monohydroxyfunktionellen Starterverbindungen hergestellt. Sie enthalten vorzugsweise keine Polyesteranteile, insbesondere keine von Lactonen oder Hydroxycarbonsäuren abgeleiteten Polyesteranteile und sind vorzugsweise frei von polymerisierbaren Doppelbindungen.

In Anwendungen, in denen eine breite Verträglichkeit gefragt ist, wie beispielsweise im Universalpastenbereich, ist es häufig von Vorteil, Additionsverbindungen einzusetzen, die mit Gemischen verschiedener Verbindungen der Formel (la) hergestellt werden. Sollen die erfindungsgemäßen Additionsverbindungen zum Beispiel in Universalabtönpasten für wässrige und unpolare Systeme verwendet werden, ist eine Kombination von wasserlöslichen mit unpolaren Verbindungen der Formel (Ia) von Vorteil.

Das zahlenmittlere Molekulargewicht Mₙ der Verbindung Y-XH ist kleiner als 20000 g/mol und liegt vorzugsweise bei maximal 10000 g/mol, besonders bevorzugt bei maximal 5000 g/mol, ganz besonders bevorzugt bei maximal 3500 g/mol und noch besser bei maximal 2000 g/mol. Das minimale Molekulargewicht Mₙ von Y-XH liegt vorzugsweise bei 100 g/mol, besonders bevorzugt bei 150 g/mol, ganz besonders bevorzugt bei 200 g/mol und am besten bei 400 g/mol. Bevorzugt sollten weniger als 50 mol% der eingesetzten Verbindungen nach Formel (la) ein zahlenmittleres Molekulargewicht von kleiner 100 g/mol besitzen, besonders bevorzugt weniger als 25 mol%, ganz besonders bevorzugt weniger als 15 mol% und am besten 0 mol%.

Bei der Umsetzung mit den monofunktionellen Verbindungen der Formel (Ia) werden 20% bis 90%, bevorzugt 20% bis 70% und besonders bevorzugt 25% bis 60% der ursprünglich eingesetzten freien NCO-Gruppen umgesetzt.

### Komponente (b2)

Die Verbindungen der allgemeinen Formel (Ib)G-(XH)ₙ mit n=2 bis 4, unterscheiden sich von denjenigen der Formel (la) im Wesentlichen dadurch, dass sie zwei, drei oder vier voneinander unabhängig definierte funktionelle Gruppen XH enthalten, die gegenüber Isocyanaten reaktiv sind. Unter den Gruppen XH sind dieselben bevorzugt wie unter Formel (Ia). Das zahlenmittlere Molekulargewicht Mₙ der Verbindungen der Formel (Ib) ist kleiner als 3000 g/mol und liegt vorzugsweise bei maximal 2500 g/mol, besonders bevorzugt bei maximal 2000 g/mol, ganz besonders bevorzugt bei maximal 1500 g/mol. Das minimale Molekulargewicht Mₙ von Verbindungen der Formel (Ib) liegt vorzugsweise bei 100 g/mol, besonders bevorzugt bei 150 g/mol, ganz besonders bevorzugt bei 300 g/mol und am besten bei 600 g/mol.

Beispiele für di-, tri- und tetrafunktionelle Verbindungen der Formel (Ib) sind Diole, Triole und Tetraole beziehungsweise Diamine, Triamine und Tetramine ohne tertiäre Aminogruppen mit 2 bis 12 Kohlenstoffatomen, Dihydroxydialkylsulfide und Dihydroxysulfone. Beispiele sind Butandiol, Hexandiol, Cyclohexandimethanol, Neopentylglykol, Ethylenglykol, Glycerin, Trimethylolpropan, Pentaerythrit, Fettsäuredialkanolamide, Thiodiglykol, Di(4-Hydroxyphenyl)sulfon sowie hydroxyfunktionelle Polybutadiene mit einer mittleren Funktionalität von 2 bis 3. Eine bevorzugte Gruppe von Verbindungen der Formel (Ib) sind Polyoxyalkylenglykole besonders bevorzugt mit Alkylengruppen mit 2 bis 4, ganz besonders bevorzugt mit zwei Kohlenstoffatomen und vorzugsweise mit zahlenmittleren Molekulargewichten Mₙ im Bereich von 200 bis 2000 g/mol, besonders bevorzugt 400 bis 1500 g/mol. Ethoxylate mit 3 Hydroxylgruppen erhält man beispielsweise durch Polymerisation unter Verwendung von trifunktionellen Alkoholen als Starterkomponente. Bevorzugt als Polyoxyalkylenglykole sind Polyethylenglykole.

Als di-, tri- oder tetrafunktionelle Verbindungen der Formel (Ib) können prinzipiell auch solche eingesetzt werden, die durch Polymerisation eines oder mehrerer Lactone, wie es bereits erwähnt wurde, mittels Di-, Tri- oder Tetrahydroxy-Startkomponenten erhalten werden können. Vorzugsweise haben diese Polyesterpolyole ein zahlenmittleres Molekulargewicht Mₙ von 500 bis 2000 g/mol. Als Startkomponente ist Butandiol oder Ethylenglykol bevorzugt. Es kommen aber auch die oben genannten Diole, Triole oder Tetraole als Starterkomponenten in Frage. Vorzugsweise enthält die Komponente (b2) weniger als 50 Mol-%, besonders bevorzugt weniger 20 Mol-% und ganz besonders bevorzugt keine Polyesterpolyole, inbesondere keine Polyesterpolyole auf Basis von Lactonen oder deren Hydroxycarbonsäure-Analoga.

Als mehrfachfunktionelle Verbindungen der Formel (Ib) können auch Polyurethane, Polyether-Polyurethane, Polyester-Polyurethane und/oder Polyether-Polyester-Polyurethane eingesetzt werden, die durch Additionsreaktion eines Diisocyanates mit einer Dihydroxyverbindung analog zu den entsprechenden monofunktionellen Verbindungen nach Formel (Ib) erhalten werden können. Vorzugsweise haben diese urethanhaltigen Verbindungen nach Formel (Ib) eine mittlere Funktionalität von höchstens 2 und ein zahlenmittleres Molekulargewicht von 300 bis 2500 g/mol, bevorzugt von 500 bis 1500 g/mol.

Die di-, tri- oder tetrafunktionellen Verbindungen der Formel (Ib) bewirken eine Vernetzung zwischen den Reaktionsprodukten aus Polyisocyanat und monofunktionellen Verbindungen der Formel (Ia). Beispielsweise können die Ausgangsprodukte in solchen Mengen eingesetzt werden, dass die di-, tri- oder tetrafunktionellen Verbindungen der Formel (Ib) das Zentrum des Moleküls darstellen, und dass an sie an die Polyisocyanate gebunden sind, deren verbleibende Isocyanatgruppen mit monofunktionellen Verbindungen der Formel (I) umgesetzt sind beziehungsweise werden. Es kann naturgemäß auch eine gewisse Übervernetzung oder Untervernetzung vorliegen.

Bei der Umsetzung mit den di-, tri- oder tetrafunktionellen Verbindungen der Formel (Ib) werden 0 bis 60 %, vorzugsweise 0% bis 45% und besonders bevorzugt 0% bis 40% der ursprünglich eingesetzten NCO-Gruppen umgesetzt.

Besonders bevorzugte Produkte werden ganz ohne Verwendung von di-, tri- oder tetrafunktionellen Verbindungen der Formel (I) erhalten.

Insgesamt werden mit den Verbindungen der Formel (I) mindestens 20%, besonders bevorzugt mindestens 25 und maximal 90%, vorzugsweise maximal 80%, besonders bevorzugt maximal 70%, der ursprünglich eingesetzten NCO-Gruppen des Polyisocyanats der Komponente (a) umgesetzt.

Die Umsetzung der Polyisocyanate mit verschiedenen Verbindungen der Formeln (Ia) und (Ib) kann in einem einzigen Reaktionsschritt oder in mehreren Reaktionsschritten nacheinander durchgeführt werden. Das kann in beliebiger Reihenfolge geschehen. In vielen Fällen ist es allerdings zweckmäßig, das Polyisocyanat nacheinander mit den Komponenten in der Reihenfolge zuerst monofunktionelle Verbindungen (Formel (Ia)) und danach polyfunktionelle Verbindungen (Formel (Ib)) umzusetzen. Die Isocyanataddition kann, je nach Reaktivität der einzelnen Reaktionspartner, in dem für diese Art von Reaktion üblichen Temperaturbereich von Raumtemperatur bis etwa 150 °C erfolgen. Zur Beschleunigung und Reduzierung von Nebenreaktionen können die nach dem Stand der Technik bekannten und üblichen Katalysatoren wie tertiäre Amine, wie beispielsweise Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen wie beispielsweise Titansäureester, Eisenverbindungen wie beispielsweise Eisen-(III)-acetylacetonat, Zinnverbindungen, beispielsweise Zinndiacetat, Zinndioctoat, Zinndilaurat oder die Dialkylderivate von Zinndialkylsalzen aliphatischer Carbonsäuren wie Dibutylzinndiacetat, Dibutylzinndilaurat oder ähnliche verwendet werden. Diese Katalysatoren werden üblicherweise in Mengen von 0,0001 bis 0,1 Gew.-Teilen pro 100 Gew.-Teile Polyisocyanat eingesetzt.

### Komponente (c1)

Die Komponente (c1) wird durch die allgemeine Formel (IIa) als Z-Q repräsentiert. Die Gruppe Z ist ein organischer basischer Rest mit mindestens einer tertiären Aminogruppe, der keine NCO-reaktiven Gruppen enthält. Vorzugsweise ist der Rest Z eine aliphatische oder cycloaliphatische Gruppe mit mindestens einer tertiären Aminogruppe gegebenenfalls in Form eines tertiären Ringstickstoffatoms eines heterocyclischen Ringsystems. Die tertiäre Aminogruppe beziehungsweise das heterocyclische Ringsystem mit tertiärem Ringstickstoff, kann direkt an die Gruppe Q gebunden sein oder über eine organische Brückengruppe ("Spacer"). Der Spacer über den die tertiäre Aminogruppe beziehungsweise das heterocyclische Ringsystem mit tertiärem Ringstickstoff an die Gruppe Q gebunden sein kann umfasst Vorzugsweise 2 bis 10, besonders bevorzugt 2 bis 5 Kohlenstoffatome. Besonders bevorzugt handelt es sich um eine Alkylengruppe mit 2 bis 10, ganz besonders bevorzugt 2 bis 5 Kohlenstoffatomen oder eine Polyethergruppe mit der gleichen Anzahl an Kohlenstoffatomen. Die Gruppe Q steht für NH₂, OH oder NHR, worin R für eine lineare oder verzweigte Alkylgruppe mit 1 bis 18 Kohlenstoffatomen steht.

Eine Gruppe von Verbindungen, die als Verbindungen Z-Q der Formel (IIa) verwendet werden können, besteht aus Monohydroxyaminen mit einer tertiären Aminogruppe oder aliphatischen Diaminen mit einer tertiären Aminogruppe und einer primären oder sekundären Aminoguppe wie beispielsweise (N,N-Diethylamino)ethanol, (N,N-Dimethylamino)ethanol, (N,N-Dimethylamino)propanol 2-(Diethylamino)ethylamin, 3-(Dimethylamino)propylamin, 3-(Diethylamino)propylamin, N,N-diethyl-1,4-butandiamin, 1-Diethylamino-4-aminopentan, wovon 3-(Dimethylamino)propylamin und (N,N-Diethylamino)ethanol bevorzugt sind.

Bei einer weiteren Gruppe steht Z für eine ein- oder zweikernige heterocyclische Gruppe, von der ein Ringstickstoffatom, vorzugsweise über eine Alkylengruppe mit 2 bis 5 Kohlenstoffatomen, an die Gruppe Q gebunden ist. Bevorzugte Heterocyclen sind Triazol, Pyrimidin, Imidazol, Pyridin, Morpholin, Pyrrolidin, Piperazin, Piperidin, Benzimidazol, Benzothiazol und/oder Triazin und besonders bevorzugt Imidazol und Benzimidazol. Diese Heterocyclen können einen oder mehrere Substituenten aufweisen. Vorzugsweise tragen sie eine der folgenden Gruppen: Alkyl- und/oder Alkoxy-Gruppen mit 1 bis 6, vorzugsweise 1 bis 4 Kohlenstoffatomen (wobei eine Methoxygruppe bevorzugt ist) oder tertiäre Aminogruppen.

Es ist bevorzugt, dass die heterocyclischen Gruppen über ein Ringstickstoffatom und eine Alkylengruppe, vorzugsweise mit 2 bis 5 Kohlenstoffatomen an die Gruppe Q gebunden sind. Die heterocyclische Gruppe kann naturgemäß neben diesem Ringstickstoffatom noch weitere Heteroatome einschließlich weiterer Ringstickstoffatome enthalten.

Weitere Beispiele für Verbindungen der Formel (IIa) sind N-(3-Aminopropyl)imidazol, N-(3-Aminopropyl)morpholin, N-(2-Aminoethyl)piperidin, 1-Methylpiperazin, Aminoethylpiperazin. Charakteristisch für diese Verbindungen ist, dass sie pro Molekül mindestens 1 reaktive Gruppe mit mindestens 1 Zerewitinoff-Wasserstoffatom enthalten, welches mit den NCO-Gruppen reagieren kann, und dass sie darüber hinaus eine stickstoffhaltige basische Gruppe ohne reaktiven Wasserstoff besitzen. Diese basischen Gruppen werden gemäß dem Stand der Technik durch ihren pKa-Wert gekennzeichnet (vergl. US-A-3,817,944; 4,032,698 und 4,070,388). Bevorzugt sind Verbindungen mit basischen Gruppen mit einem pKa-Wert von 2 bis 14, besonders bevorzugt von 5 bis 14, und ganz besonders bevorzugt von 5 bis 12. Der pKa-Wert kann Tabellenwerken entnommen werden. Die vorstehend angegebenen Grenzwerte beziehen sich auf die Messung des pKa-Wertes bei 25°C in einer 0.01-molaren Konzentration in Wasser. Diese basischen Gruppen verleihen den Additionsverbindungen gemäß der Erfindung ebenfalls eine Basizität.

Verbindungen der Formel Z-Q können beispielsweise durch Umsetzung eines (Meth)acrylats oder Epoxids mit einem Amin oder stickstoffhaltigen heterocyclischen Ringsystem erhalten werden. Beispiele für Reaktionsprodukte zwischen einem (Meth)acrylat und einem stickstoffhaltigen heterocyclischen Ringsystem sind die Reaktionsprodukte der Hydroxyethyl- und Hydroxypropylester von (Meth)acrylsäure mit der stickstoffhaltigen heterocyclischen Ringstruktur, wobei die folgenden Strukturelemente an dem Stickstoff der heterocyclischen Ringstruktur angeheftet sind:
-propionsäure-2-hydroxyethylylester, -propionsäure-2-hydroxypropylylester, -2-methylpropionsäure-2-hydroxyethylylester und -2-methylpropionsäure-2-hydroxypropylylester und ethoxylierte und/oder propoxylierte Derivate davon. Bevorzugt sind die Acrylsäureester.

Die Reaktion mit Aminen verläuft in analoger Weise.

Durch Umsetzung eines Epoxids mit einem Amin oder einer stickstoffhaltigen heterocyclischen Verbindung lassen sich ebenfalls die Verbindungen Z-Q herstellen. Bei der-Umsetzung entsteht als Gruppe Q eine sekundäre Hydroxygruppe und am reaktionsbeteiligten Stickstoffatom eine tertiäre Aminogruppe.

### Komponente (c2)

Als Verbindungen M-Q nach Formel (IIb) werden Verbindungen eingesetzt, worin M für einen organischen Rest mit einer zahlenmittleren Molmasse von maximal 1000 g/mol, bevorzugt maximal 500 g/mol und besonders bevorzugt 300 g/mol steht, der mindestens eine tertiäre Aminogruppe und mindestens eine OH-Gruppe enthält, und worin Q für NH₂, NHR oder OH steht (wobei R eine lineare oder verzweigte Alkylgruppe mit 1 bis 18 Kohlenstoffatomen darstellt).

Vorzugsweise enthält M 1 bis 10, besonders bevorzugt 1 bis 5, und ganz besonders bevorzugt 1 bis 3, wie beispielsweise 2 OH-Gruppen. Primäre OH-Gruppen sind bevorzugt.

Beispiele für M-Q mit tertiären Aminogruppen und OH-Gruppen sind Triethanolamin, N-Methyldiethanolamin, Aminopropylmethylethanolamin, 3-(Diethylamino)propan-1,2-diol, Tetrakis(2-hydroxypropyl)ethylenediamin, Bis(2-hydroxyethyl)dodecylamin, Bis(2-hydroxyethyl)octadecylamin.

Die Verbindungen der Komponente (c2) können analog zu den Verbindungen der Komponente (c1) durch Reaktion von (Meth)acrylaten oder Epoxiden mit Aminen hergestellt werden. Setzt man als Epoxid beispielsweise Glycidol ein, welches bereits eine primäre Hydroxylgruppen enthält, so wird durch Reaktion mit einem sekundären Amin ein tertiäres Amin und eine sekundäre Hydroxylgruppe zusätzlich gebildet, so dass derartige Addukte eine primäre und eine sekundäre Hydroxylgruppe sowie eine tertiäre Aminogruppe tragen.

Stickstoffhaltige Heterocyclen können in analoger Weise mit (Meth)acrylaten und Epoxiden umgesetzt werden.

Zur Herstellung der erfindungsgemäßen Additionsverbindungen können auch Gemische von verschiedenen Ausgangsstoffen wie Gemische von (a) Polyisocyanaten, und/oder Komponenten (b1) beziehungsweise (b2) und/oder Komponenten (c1) eingesetzt werden. Einzelne der mehrere der Komponenten (a), (b1), (b2) oder (c1) können im Überschuss oder Unterschuss eingesetzt werden. Vorzugsweise werden die Mengenverhältnisse aber so gewählt, dass die Isocyanatgruppen im Wesentlichen vollständig umgesetzt werden, worunter zu verstehen ist, dass vorzugsweise mindestens 90%, besonders bevorzugt mindestens 95%, ganz besonders bevorzugt mindestens 98% und optimal alle Isocyanatgruppen umgesetzt sind.

Durch die basischen Gruppen sind die Additionsverbindungen zur Salzbildung befähigt. Sie können im Sinne der Erfindung als Dispergiermittel auch in Form der entsprechenden Salze eingesetzt werden. In manchen Fällen lässt sich durch eine solche teilweise oder vollständige Versalzung eine Verbesserung der Wirksamkeit und/oder eine verbesserte Löslichkeit oder Verträglichkeit erzielen. Auch in Anwendungen, bei denen die Basizität der Produkte stört, zum Beispiel in sauer katalysierten Systemen, lassen sich häufig Verbesserungen durch teilweise oder vollständige Neutralisation erreichen.

Die Salze werden aus dem erhaltenen Reaktionsprodukt durch Neutralisation mit einer oder mehreren organischen oder anorganischen Säuren oder durch Quaternisierung erhalten. Die zu verwendende Säuremenge richtet sich nach dem Einsatzgebiet. Je nach Einzelfall können die Säurekomponenten äquimolar, im Unterschuss oder im Überschuss eingesetzt werden. Von Polycarbonsäuren kann zum Beispiel auch bis zu einem Äquivalent Polycarbonsäure pro zu neutralisierende basische Gruppe eingesetzt werden, um den Produkten einen sauren Charakter zu geben. Bevorzugt wird etwa äquimolar neutralisiert. Bevorzugt sind Salze mit organischen Carbonsäuren oder sauren Phosphorsäurestern. Beispiele für solche sauren Phosphorsäurester sind aufgeführt in EP 893 155, EP 417 490 und US 5 143 952. Beispiele für Carbonsäuren sind aliphatische und/oder aromatische Carbonsäuren wie kurz- oder langkettige Fettsäuren, Ameisensäure, Essigsäure, Neodecansäure, Ölsäure, Tallölfettsäure, Stearinsäure, Rizinolsäure, natürliche gesättigte oder ungesättigte pflanzliche oder tierische Fettsäuren und deren Maleinsäureanhydrid-Addukte, Maleinsäure, Fumarsäure, Bernsteinsäure, Dodecenylbernsteinsaure, 5-Norbornen-2,3-dicarbonsäure, Adipinsäure, Glutarsäure, Benzoesäure, Nitrobenzoesäure, Phthalsäure, Tetrahydrophthalsäure, Isophthalsäure, Terephthalsäure, dimerisierte oder trimerisierte Fettsäuren, Citronensäure und Abietinsäure.

Die erfindungsgemäßen Additionsverbindungen enthalten vorzugsweise keine ethylenisch ungesättigten Gruppen.

Des Weiteren werden die erfindungsgemäßen Additionsverbindungen vorzugsweise aus Komponenten hergestellt, die nicht lactonbasiert, insbesondere nicht caprolactonbasiert sind, das heißt, aus Komponenten (a), (b1), gegebenenfalls (b2), (c1) und gegebenenfalls (c2), zu deren Herstellung selbst keine Lactone, insbesondere keine Caprolactone (bzw. die korrespondierende Hydroxycarbonsäure) eingesetzt wurden.

Beim Einsatz der bevorzugt einzusetzenden Polyisocyanate mit im Mittel mindestens 2,5 freien Isocyanatgruppen kommt es zur Ausbildung verzweigter, d.h. nicht-linearer Polyurethanstrukturen. Folglich sind nicht-lineare Additionsverbindungen erfindungsgemäß besonders bevorzugt.

Die Herstellung der erfindungsgemäßen Additionsverbindungen kann, je nach Viskosität, in Substanz oder in Gegenwart von geeigneten Lösemitteln, Lösemittelgemischen oder anderen geeigneten Trägermedien durchgeführt werden. Geeignet sind alle Lösemittel oder Trägermedien, die unter den gewählten Reaktionsbedingungen nicht reaktiv sind oder deren Reaktivität gegenüber den Reaktionspartnern zu vernachlässigen ist und in denen die Reaktanden und die Reaktionsprodukte zumindest teilweise löslich sind. Hierzu zählen beispielsweise Kohlenwasserstoffe wie Toluol, Xylol, aliphatische und/oder cyloaliphatische Benzinfraktionen, chlorierte Kohlenwasserstoffe wie Chloroform, Trichlorethan, cyclische und acyclische Ether wie Dioxan, Tetrahydrofuran, Polyalkylenglykoldialkylether wie Dipropylenglykoldimethylether, Ester von Mono-, Di-oder Polycarbonsäuren wie Ethylacetat, Butylacetat, Butyrolacton, Dimethyl-2-Methylglutarat, Triacetin, Phthalate oder andere Weichmacher, Di- oder Polycarbonsäureester, als "Dibasic Ester" bezeichnete Dialkylester von C₂-C₄-Dicarbonsäuren, Alkylglykolester wie Ethylglykolacetat, Methoxypropylacetat, Ketone wie Methylisobutylketon, Cyclohexanon, Aceton, Säureamide wie Dimethylformamid, N-Methylpyrrolidon und dergleichen. Zweckmäßig wählt man das oder die Lösemittel beziehungsweise Trägermedien bereits unter Berücksichtigung des geplanten Einsatzgebietes aus. Zum Beispiel werden für erfindungsgemäße Additionsverbindungen für den Einsatz in wasserverdünnbaren Lacksystemen oder zur Belegung von Pigmenten in wässriger Suspension nach der Pigmentsynthese bevorzugt Lösemittel eingesetzt, die ganz oder teilweise wasserverdünnbar sind. Sollen die Produkte zum Beispiel dort eingesetzt werden, wo die Anwesenheit von VOC (volatile organic compounds) nicht erwünscht ist, sollte die Formulierung möglichst lösemittelfrei oder in entsprechend hochsiedenden Trägermedien vorliegen.

Je nach Anwendungsgebiet können die zur Synthese verwendeten Lösemittel im Reaktionsgemisch verbleiben oder werden ganz oder teilweise entfernt und gegebenenfalls durch andere Lösemittel oder Trägermedien ersetzt werden. Die erfindungsgemäßen Additionsverbindungen können je nach Verträglichkeit auch mit Harzen, Harzlösungen, Reaktivverdünnern, Bindemitteln oder mit anderen nach dem Stand der Technik bekannten Additiven kombiniert werden, wie zum Beispiel anderen Netz- und Dispergiermitteln, Antiabsetzmitteln, oberflächenaktiven Additiven wie beispielsweise Silikonen und dergleichen.

Das Lösemittel kann zum Beispiel durch Abdestillieren, gegebenenfalls bei reduziertem Druck und/oder azeotrop unter Zusatz von Wasser, ganz oder teilweise entfernt werden. Die Wirksubstanz kann aber auch durch Ausfällen mittels Zusatz von Nichtlösern wie aliphatischen Kohlenwasserstoffen, beispielsweise Hexan, anschließendes Abtrennen durch Filtration und gegebenenfalls Trocknen isoliert werden. Die nach einer dieser Methoden erhaltene Wirksubstanz kann dann in einem für das jeweilige Anwendungsgebiet geeigneten Lösemittel angelöst werden oder gegebenenfalls in reiner Form beispielsweise bei Pulverlacken, eingesetzt werden. Gegebenenfalls kann das Lösemittel, in dem das Additionsprodukt gelöst ist, nach Zusatz von geeigneten höher siedenden Lösemitteln, gegebenenfalls unter vermindertem Druck und/oder azeotrop unter Zusatz von Wasser, abdestilliert werden und dadurch das Additionsprodukt in ein für das jeweilige Anwendungsgebiet geeignetes Trägermedium überführt werden.

Die Umsetzungen können in Gegenwart üblicher Katalysatoren, beispielsweise organischen Zinnverbindungen, wie Dibutylzinndilaurat, anderen organometallischen Verbindungen wie Eisenacetylacetonat, tertiären Aminen wie Triethylendiamin, Enzymen oder dergleichen durchgeführt werden.

Durch Variation der Substituenten der Formel (Ia), bezüglich deren Art, Mengenverhältnissen und/oder Molekulargewichten lassen sich die Eigenschaften der erfindungsgemäßen Additionsverbindungen an die unterschiedlichen Anwendungsgebiete anpassen. So können zum Beispiel die Löslichkeit und die Verträglichkeit auf die unterschiedlichsten Lösemittel, Trägermedien, Bindemittel, Harze, Feststoffe und gegebenenfalls weitere polymere Verbindungen abgestimmt werden, welche in Überzugs- und Formmassen vorliegen, in denen die erfindungsgemäßen Additionsverbindungen zur Anwendung kommen.

Für den Einsatz in hochpolaren Systemen wie beispielsweise Wasserlacken, sollten die Reste Y einen ausreichend hohen Anteil an polaren Gruppen wie beispielsweise Polyethylenoxiden enthalten um eine für den jeweiligen Einsatzbereich ausreichende Wasserlöslichkeit zu erreichen. Dieser Anteil an hydrophilen Gruppen sollte aber auch nicht zu hoch sein, wenn es dadurch in bestimmten Anwendungen zu einer nicht gewünschten Erhöhung der Wasserempfindlichkeit kommt. In einer wichtigen Ausführungsform handelt es sich bei den Resten Y der XH-funktionalisierten Polyalkylenoxide um Reste, welche den Verbindungen Y-XH und letztendlich auch den erfindungsgemäßen Additionsverbindungen im wesentlichen Wasserunlöslichkeit verleihen. Solche Reste Y der XH-funktionalisierten Polyalkylenoxide enthalten zweckmäßig bis maximal 28 Gew.-%, vorzugsweise bis maximal 20 Gew.-%, besonders bevorzugt bis maximal 10 Gew.-% und ganz besonders bevorzugt bis maximal 5 Gew.-% an Ethylenoxideinheiten bezogen auf den Gesamtgehalt an Alkylenoxideinheiten im Rest Y.

Beim Einsatz in unpolaren Systemen wie Langölalkydlacken, PVC-Plastisolen oder Polyolefinen sollte vorzugsweise ein entsprechender Anteil an unpolaren Gruppen vorliegen und beim Einsatz in Systemen, bei denen eine breite Verträglichkeit wichtig ist, wie beispielsweise Pigmentkonzentraten, ist eine ausgewogene Kombination von polaren und unpolaren Gruppen von Vorteil.

Für die Dispergierung in Silikonölen wie zum Beispiel Dekamethylcyclopentasiloxan, zum Beispiel für kosmetische Zubereitungen, eignen sich besonders polydimethylsiloxanhaltige Additionsverbindungen. Wenn die Additionsverbindungen beispielsweise in einem Polyurethanharz oder in einem Lack, dessen Bindemittel ein Polyurethan ist, eingesetzt werden, ist es zweckmäßig, solche erfindungsgemäßen Additionsverbindungen einzusetzen, die in ihrem Molekül aufgrund der in den Ausgangsverbindungen der Formeln (Ia) und (Ib) enthaltenen Gruppen auch Urethangruppen oder ähnliche Gruppen enthalten, die - wie dem Fachmann bekannt ist, mit Polyurethanen verträglich sind. Das gleiche gilt sinngemäß beispielsweise für Polyacrylate, Polyester, Alkydharze und andere Polymere.

Sinngemäß gilt dies auch für die Substituenten der Komponenten (c1) und (c2), die von besonderem Einfluss auf die Affinität der erfindungsgemäßen Additionsverbindungen zu den verwendeten Feststoffen sind, die dispergiert werden sollen.

Erfindungsgemäße Additionsverbindungen mit oberflächenaktiven Substituenten, können die Oberflächenspannung der mit ihnen hergestellten Substrate verändern. Sind etwa sehr unpolare Gruppen wie zum Beispiel langkettige Alkylgruppen mit mehr als 12 Kohlenstoffatomen, polydimethylsiloxanhaltige und/oder perflouralkylhaltige Gruppen enthalten, eignen sich die Produkte, um die Oberflächenspannung von flüssigen organischen oder wässrigen oder von festen Systemen zu reduzieren, und die damit zusammenhängenden Eigenschaften wie zum Beispiel Benetzungseigenschaften, Anschmutzbarkeit, Bedruckbarkeit, Verlauf und Schaumverhalten zu beeinflussen. In Systemen, die eine Reaktivität mit OH-Gruppen, COOH-Gruppen und/oder Doppelbindungen aufweisen, beispielsweise 2-Komponenten-Systeme auf Isocyanat- oder Melaminharz-Basis, Epoxidhaltige Systeme, Strahlenhärtende Beschichtungen, wie UV- oder elektronenstrahlhärtende Lacke und Druckfarben oder ungesättigte Polyestersysteme, lässt sich durch Verwendung von erfindungsgemäßen Additionsverbindungen mit reaktiven Gruppen wie OH-Gruppen, COOH-Gruppen und/oder ungesättigten Gruppen eine Mitvernetzung erreichen, die zu Verbesserungen der Haftung, der Einbindung der Feststoffe, der mechanischen Eigenschaften und des Migrationsverhaltens führt. In Anwendungen, bei denen die Anwesenheit von Doppelbindungen, zum Beispiel durch hohe Verarbeitungstemperaturen, zu unerwünschten Nachteilen wie Verfärbungen führt, werden zweckmäßig erfindungsgemäße Additionsverbindungen mit möglichst wenig und bevorzugt gar keinen ungesättigten Gruppen eingesetzt.

Das zahlenmittlere Molekulargewicht Mₙ der erfindungsgemäßen Additionsverbindungen liegt vorzugsweise bei mindestens 500 g/mol, besonders bevorzugt bei mindestens 800 g/mol, ganz besonders bevorzugt bei mindestens 1200 g/mol und idealerweise bei mindestens 2000 g/mol.

Weiterer Gegenstand der Erfindung ist ein Verfahren zur Herstellung der erfindungsgemäßen Additionsverbindungen, wobei eine Umsetzung erfolgt von
(a) einem oder mehreren Polyisocyanaten mit mindestens zwei Isocyanatgruppen pro Molekül mit
(b1) einer oder mehreren Verbindungen der Formel (Ia)

   Y-XH (Ia)

   wobei
   XH für eine gegenüber Isocyanaten reaktive Gruppe steht und
   Y für eine nicht gegenüber Isocyanaten reaktive, monomere oder polymere Gruppe ohne tertiäre Aminogruppen steht, die eine oder mehrere aliphatische, cycloaliphatische und/oder aromatische Gruppen umfaßt,
   wobei die Verbindung der allgemeinen Formel (Ia) eine zahlenmittlere Molmasse Mₙ kleiner 20000 g/mol besitzt und
   wobei mindestens 55 Mol-% der Verbindungen der Formel (Ia) ein zahlenmittleres Molekulargewicht Mₙ von 150 bis 10000 g/mol besitzen und welche XH-funktionalisierte Polyalkylenoxide darstellen, deren Gehalt an Alkylenoxideinheiten mit mindestens drei Kohlenstoffatomen 40 bis 100 Mol-% bezogen auf den Gesamtgehalt an Alkylenoxideinheiten beträgt,
   unter der Vorgabe, dass 20% bis 90% der Isocyanatgruppen der Komponente (a) mit den Verbindungen der Formel (Ia) umgesetzt werden,
(b2) einer oder mehreren Verbindungen der Formel (Ib)

   G-(XH)ₙ (Ib)

   wobei n für 2 bis 4 steht, und G eine mindestens 2 Kohlenstoffatome enthaltende aliphatische cycloaliphatische und/oder aromatische Gruppe ohne tertiäre Aminogruppen mit zahlenmittlerem Molekulargewicht Mₙ von höchstens 3000 darstellt, die -O-, -COO-, -CONH-, -S-, und/oder -SO₂-Gruppe enthalten kann, in einer solchen Menge umgesetzt werden, dass 0 bis 60 %, vorzugsweise 0 bis 45 % und besonders bevorzugt 0 bis 40 % der NCO-Gruppen der ursprünglich eingesetzten Polyisocyanate umgesetzt werden,
   unter der Maßgabe, dass durch die Umsetzungen (b1) und (b2) insgesamt mindestens 20 % und maximal 90 %, vorzugsweise 30 bis 65 % und besonders bevorzugt 40 bis 60 % der Isocyanatgruppen der ursprünglich eingesetzten Polyisocyanate umgesetzt sind, und
(c1) einer oder mehreren Verbindungen der allgemeinen Formel (IIa)

   Z-Q (IIa)

   worin Q für -NH₂, -NHR oder OH, worin R für eine lineare oder verzweigte Alkylgruppe mit 1 bis 18 Kohlenstoffatomen steht,
   und
   Z einen organischen basischen Rest mit mindestens einer tertiären Aminogruppe, der keine gegenüber Isocyanat reaktiven Gruppen enthält, darstellt, und
(c2) optional einer oder mehrerer Verbindungen der allgemeinen Formel (IIb)

   M-Q (IIb)

   worin Q für -NH₂, -NHR oder OH, worin R für eine lineare oder verzweigte Alkylgruppe mit 1 bis 18 Kohlenstoffatomen steht, und
   M einen organischen Rest mit einer zahlenmittleren Molmasse von maximal 1000 g/mol mit mindestens einer tertiären Aminogruppe und mindestens einer Hydroxylgruppe darstellt,
unter der Maßgabe, dass mindestens 10 % der Isocyanatgruppen der Komponente (a) mit Komponente (c1) umgesetzt werden.

Die im erfindungsgemäßen Verfahren eingesetzten Komponenten (a), (b1), (b2), (c1) und (c2) entsprechen den bereits weiter oben beschriebenen.

Bevorzugt ist es das erfindungsgemäße Verfahren so durchzuführen, dass zunächst die Verbindungen der Komponente (a) mit denen der Komponente (b1) und gegebenenfalls (b2) und erst anschließend die verbliebenen Isocyanatgruppen mit den Verbindungen der Komponente (c1) zur Reaktion gebracht werden.

Es ist weiterhin vorteilhaft die Verbindungen der Formel (la) der Komponente (b1) zuerst mit der Polyisocyanatkomponente (a) umzusetzen und erst anschließend eine Umsetzung mit den Verbindungen der Formel (Ib)der Komponente (b2) vorzunehmen.

Weiterer Gegenstand der Erfindung ist die Verwendung der vorstehend beschriebenen erfindungsgemäßen Additionsverbindungen als Netz- bzw. Dispergiermittel und als Dispersionsstabilisatoren.

Gegenstand der Erfindung sind auch in flüssige Systeme einzuarbeitende pulveroder faserförmige Feststoffe, die mit diesen Additionsverbindungen als Dispergiermittel und als Dispersionsstabilisatoren oder als Netzmittel beschichtet sind.

Die erfindungsgemäßen Additionsverbindungen können anstelle der aus dem Stand der Technik bekannten Dispergiermittel, Dispersionsstabilisatoren oder Netzmittel eingesetzt werden. So können diese beispielsweise bei der Herstellung oder Verarbeitung von Lacken, Druckfarben, Tinten, beispielsweise für Tintenstrahldruck, Papierstrich, Leder- und Textilfarben, Pasten, Pigmentkonzentraten, Keramiken, und kosmetischen Zubereitungen eingesetzt werden, insbesondere, wenn diese Feststoffe wie Pigmente und/oder Füllstoffe enthalten. Auch bei der Herstellung oder Verarbeitung von Formmassen auf Basis von synthetischen, halbsynthetischen oder natürlichen makromolekularen Stoffen, wie zum Beispiel Polyvinylchlorid, gesättigten oder ungesättigten Polyestern, Polyurethanen, Polystyrolen, Polyacrylaten, Polyamiden, Epoxidharzen, Polyolefinen wie Polyethylen oder Polypropylen können sie eingesetzt werden. Beispielsweise lassen sich die Additionsverbindungen zur Herstellung von Gießmassen, PVC-Plastisolen, Gelcoats, Polymerbeton, Leiterplatten, Industrielacken, Holz- und Möbellacken, Fahrzeuglacken, Schiffsfarben, Korrosionsschutzfarben, Can- und Coil-Coatings, Maler- und Bautenlacken, wobei Bindemittel und/oder Lösemittel, Pigmente und gegebenenfalls Füllstoffe, die Additionsverbindung und übliche Hilfsstoffe vermischt werden, verwenden.

Bevorzugt werden die Additionsverbindungen zur Herstellung von Pigmente und/oder Füllstoffe enthaltenden Pigmentkonzentraten, Lacken, Pasten und/oder Formmassen verwendet.

Beispiele für übliche Bindemittel sind Harze auf Basis von Polyurethanen, Cellulosenitraten, Celluloseacetobutyraten, Alkyden, Melaminen, Polyestern, Chlorkautschuken, Epoxiden und Acrylaten. Beispiele für Beschichtungen auf Wasserbasis sind kathodische oder anodische Elektrotauchlackierungen zum Beispiel für Automobilkarossen. Weitere Beispiele sind Putze, Silikatfarben, Dispersionsfarben, Wasserlacke auf Basis von wasserverdünnbaren Alkyden, Alkydemulsionen, Hybridsystemen, 2-Komponenten-Systemen, Polyurethan- und Acrylat-Dispersionen.

Die erfindungsgemäßen Additionsverbindungen eignen sich insbesondere auch zur Herstellung von Feststoffkonzentraten, wie zum Beispiel Pigmentkonzentraten. Dazu werden die erfindungsgemäßen Verbindungen in einem Trägermedium wie organischen Lösemitteln, Weichmachern und/oder Wasser vorgelegt, und die zu dispergierenden Feststoffe werden unter Rühren zugegeben. Zusätzlich können diese Konzentrate Bindermittel und/oder andere Hilfsstoffe enthalten. Mit den erfindungsgemäßen Additionsverbindungen ist es aber insbesondere möglich, stabile bindemittelfreie Pigmentkonzentrate herzustellen. Ebenso ist es möglich mit den erfindungsgemäßen Verbindungen fließfähige Feststoffkonzentrate aus Pigmentpresskuchen herzustellen. Hierbei wird dem Presskuchen, der noch organische Lösemittel, Weichmacher und/oder Wasser enthalten kann, die erfindungsgemäße Verbindung zugemischt und die so erhaltene Mischung dispergiert. Die auf verschiedenen Wegen hergestellten Feststoffkonzentrate können dann in unterschiedliche Substrate wie beispielsweise Alkydharze, Polyesterharze, Acrylatharze, Polyurethanharze oder Epoxidharze eingearbeitet werden. Pigmente können aber auch lösemittelfrei direkt in den erfindungsgemäßen Additionsverbindungen dispergiert werden, und eignen sich dann besonders zur Pigmentierung von thermoplastischen und duroplastischen Kunststoffformulierungen.

Die erfindungsgemäßen Additionsverbindungen können vorteilhaft auch bei der Herstellung von Farbfiltern für Flüssigkristallanzeigen, -bildschirme, Farbauflösungsgeräte, Sensoren, Plasmabildschirmen, Anzeigen auf Basis der SED (Surface conduction Electron emitter Display) und für MLCC (Multi Layer Ceramic Compounds) verwendet werden. Die MLCC-Technologie wird bei der Herstellung von Mikrochips und Leiterplatten verwendet.

Die erfindungsgemäßen Additionsverbindungen können auch zur Herstellung kosmetischer Zubereitungen wie zum Beispiel Make-up, Puder, Lippenstifte, Haarfärbemittel, Cremes, Nagellacke und Sonnenschutzpräparaten verwendet werden. Diese können in den üblichen Formen wie beispielsweise als W/O- oder O/W-Emulsionen, Lösungen, Gele, Cremes, Lotionen oder Sprays vorliegen. Die erfindungsgemäßen Additionsverbindungen können vorteilhaft in zur Herstellung dieser Zubereitungen verwendeten Dispersionen eingesetzt werden. Diese können die für diese Zwecke in der Kosmetik üblichen Trägermedien, wie zum Beispiel Wasser, Ricinusöle oder Silikonöle und Feststoffe, wie zum Beispiel organische und anorganische Pigmente wie Titandioxid oder Eisenoxid enthalten.

Gegenstand der Erfindung ist des Weiteren auch die Verwendung einer erfindungsgemäßen Additionsverbindung zur Herstellung eines Pigmentlacks der insbesondere zur Herstellung eines pigmentierten Überzuges auf einem Substrat dient, wobei der Pigmentlack auf das Substrat aufgebracht wird und wobei der auf das Substrat aufgebrachte Pigmentlack eingebrannt oder ausgehärtet beziehungsweise vernetzt wird.

Die Dispergiermittel können alleine oder zusammen mit nach dem Stand der Technik üblichen Bindemitteln eingesetzt werden. Beim Einsatz in Polyolefinen kann es beispielsweise vorteilhaft sein, entsprechende niedermolekulare Polyolefine als Trägermaterialien zusammen mit dem Dispergiermittel einzusetzen.

Eine erfindungsgemäße Verwendung der Additionsverbindungen besteht auch in der Herstellung dispergierbarer pulverpartikel- und/oder faserpartikelförmiger Feststoffe, insbesondere dispergierbarer Pigmente oder Kunststofffüllstoffe, wobei die Partikel mit der erfindungsgemäßen Additionsverbindung beschichtet sind. Derartige Beschichtungen von organischen wie auch anorganischen Feststoffen werden in bekannter Weise ausgeführt, wie sie beispielsweise in EP-A-0 270 126 beschrieben werden. Hierbei kann das Lösungs- oder Emulsionsmittel entweder entfernt werden oder im Gemisch unter Bildung von Pasten verbleiben. Diese Pasten sind übliche Handelsprodukte und können zusätzlich Bindemittelanteile sowie weitere Hilfs- und Zusatzstoffe enthalten. Speziell bei Pigmenten kann die Beschichtung der Pigmentoberfläche während oder nach der Synthese der Pigmente erfolgen beispielsweise durch Zusatz der erfindungsgemäßen Additionsprodukte zur Pigmentsuspension oder während oder nach dem Pigmentfinish. Die auf diese Weise vorbehandelten Pigmente zeichnen sich durch leichtere Einarbeitbarkeit sowie durch verbessertes Viskositäts-, Flockulations- und Glanzverhalten und durch höhere Farbstärke, gegenüber nicht behandelten Pigmenten aus.

Neben der oben beschriebenen Anwendung als Dispergiermittel und/oder Beschichtungsmittel für pulver- und faserförmige Feststoffe können die erfindungsgemäßen Additionsverbindungen auch als Viskositätsreduzierer und Kompatibilisatoren in Kunstharzen eingesetzt werden. Beispiel für solche Kunstharze sind die sogenannten "sheet molding compounds" (SMC) und "bulk molding compounds" (BMC), die aus stark füllstoff- und faserhaltigen ungesättigten Polyesterharzen bestehen. Ihre Herstellung und Verarbeitung ist beispielhaft in der DE-A-36 43007 beschrieben. Ein Problem bei SMC- und BMC-Kunstharzmischungen besteht darin, dass oftmals Polystyrol (PS) der Formulierung zugesetzt wird, um die Schrumpfung während des Verarbeitungsprozesses zu reduzieren. PS ist nicht verträglich mit den verwendeten ungesättigten Polyesterharzen und es kommt zur Separation der Komponenten. Bei Verwendung von PS-gefüllten SMC- oder BMC-Mischungen können die erfindungsgemäßen Additive aufgrund ihrer guten Dispergierqualitäten eine Kompatibilisierung zwischen PS und ungesättigtem Polyesterharz herbeiführen, wodurch sich die Lagerstabilität und Verarbeitungssicherheit solcher Mischungen erhöht.

Durch die erfindungsgemäßen Additionsverbindungen können in vielen Fällen, beispielsweise auch in unverträglichen Polyol-Mischungen, Polyol-Isocyanat-Mischungen oder Polyol-Treibmittelmischungen die zur Polyurethan-Herstellung verwendet werden, die aus dieser Unverträglichkeit resultierenden Separationsprobleme der Dispersionen, insbesondere Emulsionen ganz oder teilweise vermieden werden.

Die erfindungsgemäßen Additionsverbindungen werden in einer Menge von bevorzugt 0,01 bis 10 Gew.-% bezogen auf die Gesamtmenge der Zubereitungen zugesetzt. Bezogen auf den zu dispergierenden Feststoff; werden sie in einer Menge von bevorzugt 0,5 bis 100 Gew.-% eingesetzt. Werden schwierig zu dispergierende Feststoffe verwendet, kann die Menge an eingesetzter erfindungsgemäßer Additionsverbindung durchaus höher sein. Die Menge an Dispergiermittel ist im Allgemeinen abhängig von der zu belegenden Oberfläche des zu dispergierenden Stoffes. Wird beispielsweise Titandioxid als Pigment verwendet, ist die Menge an Dispergiermittel geringer als im Fall von beispielsweise Ruß. Allgemein lässt sich sagen, dass zur Dispergierung anorganischer Pigmente weniger Dispergiermittel notwendig ist als für organische Pigmente, da letztere über eine höhere spezifische Oberfläche verfügen und von daher eine größere Menge an Dispergiermittel nötig ist. Typische Dosierungen für anorganische Pigmente liegen bei 1-10 Gew.-%, für organische Pigmente bei 10-30 Gew.-% (jeweils Wirksubstanz Additionsverbindung bezogen auf Pigment). Bei sehr feinteiligen Pigmenten (z.B. einigen Rußen) sind auch Zugabemengen von 30-80 Gew.-% oder mehr nötig.

Als Kriterium für eine ausreichende Pigmentstabilisierung können beispielsweise Farbstärke, Glanz und Transparenz der Pigmentanreibung oder der Grad des Ausschwimmens (Rub-out Test) bei einer Weißabmischung herangezogen werden.

Die Dispergierung der Feststoffe kann als Einzelanreibung erfolgen oder auch als Gemischtanreibung mit mehreren Pigmenten gleichzeitig, wobei die besten Ergebnisse in der Regel bei Einzelanreibungen zu erreichen sind. Bei der Verwendung von Mischungen verschiedener Feststoffe kann es durch gegensätzliche Ladungen auf den Feststoffoberflächen verstärkt zu Agglomerationen in der flüssigen Phase kommen. In diesen Fällen lässt sich bei Einsatz der erfindungsgemäßen Additionsverbindungen häufig eine gleichnamige, in der Regel positive, Ladung aller Teilchen erreichen und damit Instabilitäten durch Ladungsunterschiede vermeiden. Ihre optimale Wirkung erzielen die Dispergiermittel bei Zugabe zum Mahlgut, insbesondere, wenn zunächst der zu dispergierende Feststoff nur mit dem Additiv und gegebenenfalls Lösemitteln gemischt wird ("Premix"), da dann das Additiv bevorzugt auf die Feststoffoberfläche adsorbieren kann, ohne in Wettbewerb mit den Bindemittel-Polymeren treten zu müssen. In der Praxis ist diese Vorgehensweise aber nur in Ausnahmefällen nötig. Bei Bedarf können die Additionsverbindungen auch nachträglich eingesetzt werden (als sogenannte "Post-Additive"), zum Beispiel um in einem fertig aufgelackten Ansatz Ausschwimm- oder Flockulationsprobleme zu lösen. In der Regel sind in diesem Fall aber erhöhte Additiv-Dosierungen erforderlich.

In einigen Fällen können die erfindungsgemäßen Additionsverbindungen einen mehr oder weniger ausgeprägten Einfluss auf die Rheologie des Systems ausüben. Sie können daher in solchen Fällen auch zur Rheologiekontrolle eingesetzt werden, gegebenenfalls in Kombination mit anderen rheologischen Additiven wie pyrogener Kieselsäure, Schichtsilikaten (Bentoniten), hydrierten Rizinusölen oder den Additiven BYK^{®}-410, BYK^{®}-420 und BYK^{®}-425 (BYK Chemie GmbH). Häufig sind hierbei synergistische Effekte zu beobachten. In vielen Fällen lassen sich auch die Korrosionsschutzeigenschaften von Beschichtungen durch den Einsatz der erfindungsgemäßen Additionsverbindungen verbessern.

Beispiele für pulver- oder faserförmige Feststoffe sind solche, die mit Dispergiermitteln beschichtet werden können, insbesondere organische und anorganische Pigmente, die in Anstrichmitteln, Überzugsmitteln, Formmassen oder sonstigen Kunststoffen eingesetzt werden, anorganische oder organische Füllstoffe, die zum Füllen oder Verstärken von Anstrichmitteln, Überzugsmitteln, Formmassen oder sonstigen Kunststoffen eingesetzt werden. Eine Untergruppe von derartigen Füllstoffen sind Fasern organischer und/oder anorganischer Natur, die ebenfalls als Füllstoffe oder Verstärkungsstoffe verwendet werden.

Beispiele für Pigmente sind Mono-, Di-, Tri- und Polyazopigmente, Oxazin-Pigmente, Dioxazin-Pigmente, Thiazin-Pigmente, Diketo-pyrrolo-pyrrole, Phthalocyanine, Ultramarin und andere Metallkomplex-Pigmente, indigoide Pigmente, Diphenylmethan-, Triarylmethan-, Xanthen-, Acridin-, Chinacridon-, Methin-Pigmente, Anthrachinon-, Pyranthron-, Perylen- und andere polycyclische Carbonyl-Pigmente, anorganische Pigmente auf Basis von Ruß, Graphit, Zink, Titandioxid, Zinkoxid, Zinksulfid, Zinkphosphat, Bariumsulfat, Lithophone, Eisenoxid, Ultramarin, Manganphosphat, Cobaltaluminat, Cobaltstannat, Cobaltzinkat, Antimonoxid, Antimonsulfid, Chromoxid, Zinkchromat, gemischten Metalloxiden auf Basis von Nickel, Bismut, Vanadium, Molybdän, Cadmium, Titan, Zink, Mangan, Kobalt, Eisen, Chrom, Antimon, Magnesium, Aluminium (beispielsweise Nickeltitangelb, Bismutvanadat-molybdatgelb oder Chromtitangelb), magnetischen Pigmenten auf Basis von Reineisen, Eisenoxiden und Chromoxiden oder Mischoxyden, Metalleffektpigmente aus Aluminium, Zink, Kupfer oder Messing sowie Perlglanzpigmente, fluoreszierende und phosphoreszierende Leuchtpigmente. Alle vorgenannten Pigmente können oberflächenmodifiziert vorliegen und basische, saure oder neutrale Gruppen an der Oberfläche besitzen. Bevorzugt sind neutrale oder sauer modifizierte Pigmente, wie beispielsweise oxidierte Ruße.

Weitere Beispiele sind nanoskalige organische oder anorganische Feststoffe mit Teilchengrößen unterhalb von 100 nm, wie bestimmte Rußtypen oder Partikel, die aus einem Metall-, oder Halbmetalloxid bzw. -hydoxid bestehen, sowie Partikel, die aus gemischten Metall- und/oder Halbmetalloxiden bzw. -hydroxiden bestehen. Beispielsweise lassen sich die Oxide und/oder Oxidhydroxide des Aluminiums, Siliziums, Zinks, Titans, und dergleichen zur Herstellung solcher extrem feinteiliger Feststoffe heranziehen. Der Herstellprozess dieser oxidischen, hydroxidischen oder oxidhydroxidischen Teilchen kann über die unterschiedlichsten Verfahren wie beispielsweise lonenaustauschprozesse, Plasmaprozesse, Sol-Gel-Verfahren, Ausfällung, Zerkleinerung (beispielsweise durch Vermahlung) oder Flammhydrolyse und dergleichen erfolgen.

Beispiele für pulver- oder faserförmige Füllstoffe sind solche, die aufgebaut sind aus pulver- oder faserförmigen Teilchen von Aluminiumoxid, Aluminiumhydroxid, Siliziumdioxid, Kieselgur, Kieselerde, Quarz, Kieselgel, Talkum, Kaolin, Glimmer, Perlite, Feldspat, Schiefermehl, Calciumsulfat, Bariumsulfat, Calciumcarbonat, Calcit, Dolomit, Glas oder Kohlenstoff. Weitere Beispiele für Pigmente oder Füllstoffe finden sich beispielsweise in der EP-A-0 270 126. Auch Flammschutzmittel wie z.B. Aluminium- oder Magnesiumhydroxid und Mattierungsmittel wie z.B. Kieselsäuren lassen sich ebenfalls hervorragend dispergieren und stabilisieren.

Im Folgenden wird die vorliegende Erfindung durch nachstehende Beispiele zusätzlich erläutert.

### BEISPIELE

Bei molekular uneinheitlichen Substanzen stellen die angegebenen Molekulargewichte - im Folgenden wie schon in der vorstehenden Beschreibung - Durchschnittswerte des Zahlenmittels dar. Die Molekulargewichte beziehungsweise zahlenmittleren Molekulargewichte Mₙ werden bei Vorhandensein titrierbarer Hydroxy- oder Amino-Gruppen durch Endgruppenbestimmung über die Ermittlung der OH-Zahl beziehungsweise der Amin-Zahl bestimmt. Bei Verbindungen auf die eine Endgruppenbestimmung nicht anwendbar ist wird das zahlenmittlere Molekulargewicht mittels Gelpermeationschromatographie gegen einen Polystyrolstandard bestimmt.

Sofern nicht anders ausgeführt, handelt es sich bei Angaben in Teilen um Gewichtsteile und bei Angaben in Prozenten um Gewichtsprozente.

Der freie NCO-Gehalt der zum Einsatz kommenden Polyisocyanate sowie der Reaktionsverlauf der NCO-Additionen wird nach EN ISO 9369 durch Abreaktion mit Butylamin und anschließende Titration des Aminüberschusses bestimmt. Diese Methoden sind auch beschrieben bei Saul Patai "The Chemistry of Cyanates and their Thio Derivates", Part 1, Chapter 5, 1977.

Die Herstellung der hydroxyfunktionellen Caprolactonpolyester erfolgt wie zum Beispiel in der EP 158678 beschrieben.

### Herstellungsbeispiele

### Beispiel 1 (nicht erfindungsgemäßes Vergleichsbeispiel)

28,1 Teile Polyisocyanat P1 werden mit 38,5 Teilen BCPE1100 und 22,7 Teilen PMA (Methoxypropylacetat) homogenisiert. Unter Schutzgas wird auf 80°C erhitzt und 0,003 Teile DBTL (Dibutyzinndilaurat) zugegeben. Es wird etwa 1 Stunde bei dieser Temperatur gerührt bis 65% der eingesetzten NCO-Gruppen umgesetzt sind. Dann werden 2 Teile DMAPA zugegeben und weiter bei 80°C gerührt, bis sämtliche NCO-Gruppen abreagiert sind. Das Produkt ist mittelviskos, hat einen Festkörpergehalt von 60% und eine Aminzahl von 12 mg KOH/g. Nach einigern Tagen bei 20°C zeigt das Produkt eine starke Kristallbildung.

In aromatenfreiem Testbenzin ist das Produkt nicht löslich.

### Beispiel 2

Analog zu Beispiel 1 werden statt BCPE1100 38,5 Teile BPO1100 eingesetzt. Der Festkörpergehalt beträgt 60%. und die Aminzahl 12 mg KOH/g. Bei Lagerung bleibt das Produkt homogen und flüssig. Auch bei längerer Lagerung unter 0°C tritt keine Kristallbildung auf.

In aromatenfreiem Testbenzin läßt sich eine 10% ige klare Lösung herstellen.

### Beispiel 3

Analog zu Beispiel 2 werden statt DMAPA 1,7 Teile DMEA eingesetzt. Der Festkörpergehalt beträgt 60% und die Aminzahl 12 mg KOH/g.

### Beispiel 4

Analog zu Beispiel 2 werden statt DMAPA 2,5 Teile API eingesetzt. Der Festkörpergehalt beträgt 60% und die Aminzahl 12 mg KOH/g.

### Beispiel 5

Analog zu Beispiel 2 werden statt DMAPA 2,3 Teile DEEA eingesetzt. Der Festkörpergehalt beträgt 60% und die Aminzahl 12 mg KOH/g.

### Beispiel 6

15,7 Teile Polyisocyanat P1 werden mit 9,9 Teilen BPO1100 und 46,9 Teilen PMA homogenisiert. Unter Schutzgas wird auf 60°C erhitzt und 0,001 Teile DBTL zugegeben. Nach ca. einer Stunde sind 30% der eingesetzten NCO-Gruppen umgesetzt. Dann werden 1,3 Teile eines PEG400 zugegeben. Bei 60°C wird weiter gerührt, bis weitere 21% der eingesetzten NCO-Gruppen umgesetzt sind. Dann werden 1,9 Teile API sowie 24,5 Teile N-Methylpyrrolidon zugegeben und weiter bei 80°C gerührt, bis die restlichen NCO-Gruppen abreagiert sind. Das Produkt besitzt eine Aminzahl von 8 mg KOH/g und einen Festkörper von 23 %.

### Beispiel 7

15,7 Teile Polyisocyanat P1 werden mit 9,9 Teilen BPO1100 und 46,9 Teilen PMA homogenisiert. Unter Schutzgas wird auf 60°C erhitzt und 0,001 Teile DBTL zugegeben. Nach ca. einer Stunde sind 30% der eingesetzten NCO-Gruppen umgesetzt. Dann werden 3,15 Teile eines PEG1000 zugegeben. Bei 60°C wird weiter gerührt, bis weitere 21% der eingesetzten NCO-Gruppen umgesetzt sind. Dann werden 1,9 Teile API sowie 24,5 Teile N-Methylpyrrolidon zugegeben und weiter bei 80°C gerührt, bis die restlichen NCO-Gruppen abreagiert sind. Das Produkt besitzt eine Aminzahl von 8 mg KOH/g und einen Festkörper von 23 %.

### Beispiel 8

24 Teile Polyisocyanat P1 werden mit 25,6 Teilen BPO1400 sowie 26 Teilen PMA und 41,3 Teilen Ethylacetat homogenisiert. Unter Schutzgas wird auf 65°C erhitzt und 0,002 Teile DBTL zugegeben. Nach einer Stunde sind 40% der eingesetzten NCO-Gruppen umgesetzt. Dann werden 1,5 Teile PEG600 zugegeben. Bei 65°C wird weiter gerührt, bis weitere 11 % der eingesetzten NCO-Gruppen umgesetzt sind. Dann wird mit 2,3 Teilen DMAPA versetzt und bei 70°C gerührt, bis die restlichen NCO-Gruppen abreagiert sind. Das Produkt ist niedrigviskos, besitzt einen Festkörpergehalt von 35%, und eine Aminzahl von 10 mg KOH/g.

### Beispiel 9

Zu 29,6 Teilen Polyisocyanat P1, 25,2 Teilen Ethylacetat und 0,001 Teilen DBTL werden bei 80°C über eine Stunde langsam mit 24 Teile BPO700 zugetropft. Nachdem 60% der eingesetzten NCO-Gruppen abreagiert sind, werden 2,7 Teile DMEA zugegeben. Nachdem die restlichen NCO-Gruppen abregiert sind, wird mit 17,4 Teilen Propylenglykolmonomethylether (PM) verdünnt. Das Produkt ist mittelviskos, besitzt einen Festkörpergehalt von 43% und eine Aminzahl von 11 mg KOH/g.

### Beispiel10

Zu 29,6 Teilen Polyisocyanat P1, 50 Teilen PMA und 0,001 Teilen DBTL werden bei 80°C über eine Stunde langsam mit 37,2 Teile BPO1100 zugetropft. Nachdem 60% der eingesetzten NCO-Gruppen abreagiert sind, werden 2,3 Teile DMAPA zugegeben. Nachdem die restlichen NCO-Gruppen abregiert sind, wird mit 17,4 Teilen Tripropylenglykolmonomethylether (TPM) verdünnt. Das Produkt ist mittelviskos, besitzt einen Festkörpergehalt von 40% und eine Aminzahl von 9 mg KOH/g.

### Beispiel 11

Zu 29,6 Teilen Polyisocyanat P1, 65,3 Teilen PMA und 0,001 Teilen DBTL werden bei 80°C über eine Stunde langsam mit 47,4 Teile BPO1400 zugetropft. Nachdem 60% der eingesetzten NCO-Gruppen abreagiert sind, werden 2,3 Teile DMAPA zugegeben. Nachdem die restlichen NCO-Gruppen abregiert sind, wird mit 17,4 Teilen Dipropylenglykolmonomethylether (DPM) verdünnt. Das Produkt ist mittelviskos, besitzt einen Festkörpergehalt von 40% und eine Aminzahl von 8 mg KOH/g.

### Beispiel 12

Zu 29,6 Teilen Polyisocyanat P3, 80,4 Teilen PMA und 0,001 Teilen DBTL werden bei 80°C über eine Stunde langsam mit 57,5 Teile BPO1700 zugetropft. Nachdem 60% der eingesetzten NCO-Gruppen abreagiert sind, werden 2,3 Teile DMAPA zugegeben. Nachdem die restlichen NCO-Gruppen abregiert sind, wird mit 17,4 Teilen Dipropylenglykolmonomethylether (DPM) verdünnt. Das Produkt ist mittelviskos, besitzt einen Festkörpergehalt von 40% und eine Aminzahl von 7 mg KOH/g.

### Beispiel 13

Zu 14,4 Teilen Polyisocyanat P2 37 Teilen PMA und 0,003 Teilen DBTL werden bei 80°C über 4 Stunden langsam mit 41 Teile BPO1100 zugetropft. Nachdem 50% der eingesetzten NCO-Gruppen abreagiert sind, werden 4,7 Teile API zugegeben. Nachdem die restlichen NCO-Gruppen abregiert sind, wird mit 3 Teilen Dipropylenglykolmonomethylether (DPM) verdünnt. Das Produkt ist mittelviskos, besitzt einen Festkörpergehalt von 60% und eine Aminzahl von 21 mg KOH/g.

### Legende:

P1 =Aromatisches TDI-Polyisocyanurat mit einem freien NCO-Gehalt von 8,0% als 51%ige Lösung in Butylacetat, z.B. Desmodur ®IL, Bayer AG
P2 =Aliphatisches Polyisocyanat (HDI-Trimerisat) mit einem freien NCO-Gehalt von 21,8%, z.B. Desmodur ® N3300, Bayer AG
P3 =Aromatisches TDI-Polyisocyanurat mit einem freien NCO-Gehalt von 8,0%; als 51%ige Lösung in Ethylacetat, z.B. Desmodur ® IL EA, Bayer AG
BCPE1100 = Butanolgestarteter Monohydroxyfunktioneller ε-Caprolactonpolyester, mittleres Molekulargewicht Mn 1100
BPO700,1100,1400 = Butanolgestarteter monohydroxyfunktioneller PO Polyether, mittleres Molekulargewicht Mn=700,1100 bzw. 1400
PEG 400, 600, 1000 = Polyethylenglykol (dihydroxyfunktionell), mittleres Molekulargewicht Mn 400, 600 bzw 1000
DMEA = N,N-Dimethylaminoethanol
API = Aminopropylimidazol
DEEA = N,N-Diethylaminoethanol
DMAPA = N,N-Dimethylaminopropylamin

### Verwendungsbeispiele

### Verwendung im Pastensystem

### Pigmentpaste mit Spezialschwarz 4:

| | |
|---|---|
| Laropal A 81 65%ig in PMA | 23,50 Teile |
| PMA | 22,90 Teile |
| Erfindungsgemäße Additionsverbindung | 19,60 Teile |
| Ruß, z.B. Spezialschwarz 4 (Degussa AG) | 34,00 Teile |
| | 100,00Teile |

| | |
|---|---|
| +10%PMA | |

### Dispergierung: Dispermat CV/ 60 min./ 10000 U/min / 40°C / 1 mm Perlen 1:1

Pigmentpaste Spezialschwarz 4, hergestellt mit den Beispielen 2,3 und 4

### Bewertung der Pastenviskosität -visuelt-:

| Additiv: | Bewertung: |
|---|---|
| Beispiel 2 | 1 |
| Beispiel 3 | 2 |
| Beispiel 4 | 1 |

Benotung: 1 = niedrigviskos, 3 = mittelviskos, 5 = pastös

## Patentansprüche

1. Additionsverbindungen und deren Salze, **dadurch gekennzeichnet, dass** die Additionsverbindungen erhältlich sind durch die Umsetzung von
(a) einem oder mehreren Polyisocyanaten mit mindestens zwei Isocyanatgruppen pro Molekül mit
(b1) einer oder mehreren Verbindungen der Formel (Ia)
Y-XH (Ia)
wobei
XH für eine gegenüber Isocyanaten reaktive Gruppe steht und
Y für eine nicht gegenüber Isocyanaten reaktive, monomere oder polymere Gruppe ohne tertiäre Aminogruppen steht, die eine oder mehrere aliphatische, cycloaliphatische und/oder aromatische Gruppen umfaßt,
wobei die Verbindung der allgemeinen Formel (Ia) eine zahlenmittlere Molmasse Mₙ kleiner 20000 g/mol besitzt und
wobei mindestens 55 Mol-% der Verbindungen der Formel (Ia) ein zahlenmittleres Molekulargewicht Mₙ von 150 bis 10000 g/mol besitzen und welche XH-funktionalisierte Polyalkylenoxide darstellen, deren Gehalt an Alkylenoxideinheiten mit mindestens drei Kohlenstoffatomen 40 bis 100 Mol-% bezogen auf den Gesamtgehalt an Alkylenoxideinheiten beträgt,
unter der Vorgabe, dass 20% bis 90% der Isocyanatgruppen der Komponente (a) mit den Verbindungen der Formel (Ia) umgesetzt werden,
(b2) einer oder mehreren Verbindungen der Formel (Ib)
G-(XH)ₙ (Ib)
wobei
XH für eine gegenüber Isocyanaten reaktive Gruppe steht und
n für 2 bis 4 steht, und G eine mindestens 2 Kohlenstoffatome enthaltende aliphatische, cycloaliphatische und/oder aromatische Gruppe ohne tertiäre Aminogruppen mit zahlenmittlerem Molekulargewicht Mₙ von höchstens 3000 darstellt, in einer solchen Menge, dass 0 bis 60 % der isocyanatgruppen der ursprünglich eingesetzten Polyisocyanate umgesetzt werden,
unter der Maßgabe, dass durch die Umsetzungen (b1) und (b2) insgesamt mindestens 20 % und maximal 90 % der isocyanatgruppen der ursprünglich eingesetzten Polyisocyanate umgesetzt sind,
(c1) einer oder mehreren Verbindungen der allgemeinen Formel (IIa)
Z-Q (IIa)
worin Q für -NH₂, -NHR oder OH, worin R für eine lineare oder verzweigte Alkylgruppe mit 1 bis 18 Kohlenstoffatomen steht, und
Z einen organischen basischen Rest mit mindestens einer tertiären Aminogruppe, der keine gegenüber Isocyanat reaktiven Gruppen enthält, darstellt, und
(c2) optional einer oder mehrerer Verbindungen der allgemeinen Formel (IIb)
M-Q (IIb)
worin Q für -NH₂, -NHR oder OH, worin R für eine lineare oder verzweigte Alkylgruppe mit 1 bis 18 Kohlenstoffatomen steht, und
M einen organischen Rest mit einer zahlenmittleren Molmasse von maximal 1000 g/mol mit mindestens einer tertiären Aminogruppe und mindestens einer Hydroxylgruppe darstellt,
unter der Maßgabe, dass mindestens 10 % der Isocyanatgruppen der Komponente (a) mit Komponente (c1) umgesetzt werden.

2. Additionsverbindungen nach Anspruch 1, wobei Y gegebenenfalls die Heteroatome O, S, Si und/oder N und/oder Ether-, Urethan-, Carbonat-, Amid-, Siloxan- und/oder Estergruppen enthält, und gegebenenfalls Wasserstoff gegen Halogen substituiert ist.

3. Additionsverbindungen nach Anspruch 1 oder 2, wobei Z eine oder mehrere der folgenden Bedeutungen hat: A) eine aliphatische und/oder cycloaliphatische Gruppe mit mindestens einer tertiären Aminogruppe oder B) eine heterocyclische Gruppe mit mindestens einem basischen Ringstickstoffatom, das kein Wasserstoffatom enthält, wobei die heterocyclische Gruppe über eine organische Kopplungsgruppe an die Gruppe Q gebunden sein kann.

4. Additionsverbindungen nach einem oder mehreren der Ansprüche 1 bis 3, wobei mindestens zwei verschiedene Verbindungen der Formel (Ia) eingesetzt werden.

5. Additionsverbindungen und deren Salze nach einem oder mehreren der Ansprüche 1 bis 4, **dadurch gekennzeichnet, dass** ein Teil der monofunktionellen Verbindungen der Formel (Ia) monohydroxyfunktionelle Polyether, Polyester, Polyether-Polyester und/oder aliphatische und/oder cycloaliphatische Monoalkohole mit 2 bis 30 Kohlenstoffatomen, deren Wasserstoffatome teilweise durch Halogen und/oder Arylreste ersetzt sind, sind.

6. Additionsverbindungen nach einem oder mehreren der Ansprüche 1 bis 5, **dadurch gekennzeichnet, dass** als polyfunktionelle Verbindungen der Formel (Ib) di-, tri- oder tetrahydroxyfunktionelle Polyether, Polyester oder Polyether-Polyester eingesetzt werden.

7. Additionsverbindungen nach einem oder mehreren der Ansprüche 1 bis 6, **dadurch gekennzeichnet, dass** sie keine ungesättigten Gruppen enthalten.

8. Additionsverbindungen nach einem oder mehreren der Ansprüche 1 bis 7, **dadurch gekennzeichnet, dass** es sich bei den Polyisocyanaten um ein oder mehrere Isocyanuratgruppen enthaltende Produkte von Diisocyanaten auf Basis Hexamethylendiisocyanat, Diisophorondiisocyanat und/oder Toluylandiisocyanat handelt.

9. Verfahren zur Herstellung der Additionsverbindungen nach einem oder mehreren der Ansprüche 1 bis 8, wobei eine Umsetzung erfolgt von
(a) einem oder mehreren Polyisocyanaten mit mindestens zwei Isocyanatgruppen pro Molekül mit
(b1) einer oder mehreren Verbindungen der Formel (Ia)
Y-XH (Ia)
wobei
XH für eine gegenüber Isocyanaten reaktive Gruppe steht und
Y für eine nicht gegenüber Isocyanaten reaktive, monomere oder polymere Gruppe ohne tertiäre Aminogruppen steht, die eine oder mehrere aliphatische, cycloaliphatische und/oder aromatische Gruppen umfaßt,
wobei die Verbindung der allgemeinen Formel (Ia) eine zahlenmittlere Molmasse Mₙ kleiner 20000 g/mol besitzt und
wobei mindestens 55 Mol-% der Verbindungen der Formel (Ia) ein zahlenmittleres Molekulargewicht Mₙ von 150 bis 10000 g/mol besitzen und welche XH-funktionallslerte Polyalkylenoxide darstellen, deren Gehalt an Alkylenoxideinhelten mit mindestens drei Kohlenstoffatomen 40 bis 100 Mol-% bezogen auf den Gesamtgehalt an Alkylenoxideinheiten beträgt,
unter der Vorgabe, dass 20% bis 90% der Isocyanatgruppen der Komponente (a) mit den Verbindungen der Formel (la) umgesetzt werden,
(b2) einer oder mehreren Verbindungen der Formel (Ib)
G-(XH)ₙ (Ib)
wobei
XH für eine gegenüber Isocyanaten reaktive Gruppe steht und n für 2 bis 4 steht, und G eine mindestens 2 Kohlenstoffatome enthaltende aliphatische, cycloaliphatische und/oder aromatische Gruppe ohne tertiäre Aminogruppen mit zahlenmittlerem Molekulargewicht Mₙ von höchstens 3000 g/mol darstellt in einer solchen Menge, dass 0 bis 60 % der Isocyanatgruppen der ursprünglich eingesetzten Polyisocyanate umgesetzt werden,
unter der Maßgabe, dass durch die Umsetzungen (b1) und (b2) Insgesamt mindestens 20 % und maximal 90 % der Isocyanatgruppen der ursprünglich eingesetzten Polyisocyanate umgesetzt sind,
(c1) einer oder mehreren Verbindungen der allgemeinen Formel (IIa)
Z-Q (IIa)
worin Q für -NH₂, -NHR oder OH, worin R für eine lineare oder verzweigte Alkylgruppe mit 1 bis 18 Kohlenstoffatomen steht,
und
Z einen organischen basischen Rest mit mindestens einer tertlären Aminogruppe, der keine gegenüber lsocyanat reaktiven Gruppen enthält, darstellt, und
(c2) optional einer oder mehrerer Verbindungen der allgemeinen Formel (IIb)
M-Q (IIb)
worin Q für -NH₂, -NHR oder OH, worin R für eine lineare oder verzweigte Alkylgruppe mit 1 bis 18 Kohlenstoffatomen steht, und
M einen organischen Rest mit einer zahlenmittleren Molmasse von maximal 1000 g/mol mit mindestens einer tertiären Aminogruppe und mindestens einer Hydroxylgruppe darstellt,
unter der Maßgabe, dass mindestens 10 % der Isocyanatgruppen der Komponente (a) mit Komponente (c1) umgesetzt werden.

10. Verfahren zur Herstellung einer Additionsverbindung nach Anspruch 9, wobei zunächst Komponente (a) mit Komponente (b1) und gegebenenfalls (b2) zur Reaktion gebracht wird und anschließend eine Umsetzung mit Komponente (c1) stattfindet.

11. Verfahren zur Herstellung einer Additionsverbindung nach einem der Ansprüche 9 oder 10, wobei Komponente (a) zunächst mit Verbindungen der allgemeinen Formel (la) umgesetzt wird und anschließend mit Verbindungen der allgemeinen Formel (Ib).

12. Verwendung einer der Additionsverbindungen aus einem oder mehreren der Ansprüche 1 bis 8 oder hergestellt nach einem oder mehreren der Verfahren gemäß Ansprüchen 9 bis 11, als Dispergiermittel, Dispersionsstabilisator und/oder Netzmittel.

13. Verwendung einer der Additionsverbindungen aus einem oder mehreren der Ansprüche 1 bis 8 oder hergestellt nach einem oder mehreren der Verfahren gemäß Ansprüchen 9 bis 11, bei der Herstellung oder Verarbeitung von Lacken, Druckfarben, Tinten, Papierstrich, Leder- und Textilfarben, Pasten, Pigmentkonzentraten, Keramiken, kosmetischen Zubereitungen, Gießmassen und/oder Formmassen auf Basis von synthetischen, halbsynthetischen oder natürlichen makromolekularen Stoffen.

14. Verwendung einer der Additionsverbindungen aus einem oder mehreren der Ansprüche 1 bis 8 oder hergestellt nach einem oder mehreren der Verfahren gemäß Ansprüchen 9 bis 11, zur Herstellung von Pigmente und/oder Füllstoffe enthaltenden Pigmentkonzentraten, Lacken, Pasten und/oder Formmassen.

15. Verwendung einer der Additionsverbindungen nach einem oder mehreren der Ansprüche 1 bis 8 oder hergestellt nach einem oder mehreren der Verfahren gemäß Ansprüchen 9 bis 11, zur Beschichtung von pulverpartikel- und/oder faserpartlkelförmigen Feststoffen.

16. Verwendung einer Additionsverbindung nach Anspruch 15, wobei die pulverpartikel- und/oder faserpartikelförmigen Feststoffe disperglerbare Pigmente und/oder Füllstoff sind.

17. Verwendung einer der Additionsverbindungen nach einem oder mehreren der Ansprüche 1 bis 8 oder hergestellt nach einem oder mehreren der Verfahren gemäß Ansprüchen 9 bis 11, zur Herstellung eines Pigmentlacks.

18. Verwendung einer Additionsverbindung nach einem oder mehreren der Ansprüche 1 bis 8 oder hergestellt nach einem oder mehreren der Verfahren gemäß Ansprüchen 9 bis 11, zur Herstellung eines pigmentierten Überzugs auf einem Substrat, wobei mit der Additionsverbindung ein Pigmentlack hergestellt wird, wobei der Pigmentlack auf das Substrat aufgebracht wird und wobei der auf das Substrat aufgebrachte Pigmentlack eingebrannt oder ausgehärtet bzw. vernetzt wird.

19. Pulverpartikel- und/oder faserpartikelförmige Feststoffe, **dadurch gekennzeichnet, dass** diese mit einer Additionsverbindung nach einem oder mehreren der Ansprüche 1 bis 8 oder hergestellt nach einem oder mehreren der Verfahren gemäß Ansprüchen 9 bis 11, beschichtet sind.

20. Pulverpartikel- und/oder faserpartikelförmige Feststoffe nach Anspruch 19, wobei es sich bei den pulverpartikel- und/oder faserpartikelformigen Feststoffen um Pigmente und/oder Füllstoffe handelt.

## Claims

1. Addition compounds and salts thereof, **characterized in that** the addition compounds are obtainable by reacting
(a) one or more polyisocyanates having at least two isocyanate groups per molecule with
(b1) one or more compounds of the formula (Ia)
Y-XH (Ia)
where
XH is a group that is reactive towards isocyanates and
Y is a monomeric or polymeric group that is not reactive towards isocyanates, that contains no tertiary amino groups and that comprises one or more aliphatic, cycloaliphatic and/or aromatic groups,
the compound of the general formula (Ia) possessing a number-average molar mass Mₙ of less than 20 000 g/mol and
at least 55 mol% of the compounds of the formula (Ia) possessing a number-average molecular weight Mₙ of 150 to 10 000 g/mol and which represent XH-functionalized polyalkylene oxides which contain 40 to 100 mol% of alkylene oxide units having at least three carbon atoms, based on the total amount of alkylene oxide units,
with the proviso that 20% to 90% of the isocyanate groups of component (a) are reacted with the compounds of the formula (Ia),
(b2) one or more compounds of the formula (Ib)
G-(XH)ₙ (Ib)
where XH is a group that is reactive towards isocyanates and n is 2 to 4 and G is an aliphatic, cycloaliphatic and/or aromatic group which contains at least 2 carbon atoms, has no tertiary amino groups and has a number-average molecular weight Mₙ of not more than 3000, in an amount such that 0% to 60% of the isocyanate groups of the polyisocyanates originally used are reacted,
with the proviso that, as a result of the reactions (b1) and (b2), a total of at least 20% and not more than 90% of the isocyanate groups of the polyisocyanates originally used have undergone reaction,
(c1) one or more compounds of the general formula (IIa)
Z-Q (IIa)
in which Q is -NH₂, -NHR or OH, in which R is a linear or branched alkyl group having 1 to 18 carbon atoms, and
Z is an organic basic radical having at least one tertiary amino group and containing no isocyanate-reactive groups, and
(c2) optionally one or more compounds of the general formula (IIb)
M-Q (IIb)
in which Q is -NH₂, -NHR or OH, in which R is a linear or branched alkyl group having 1 to 18 carbon atoms, and
M is an organic radical having a number-average molar mass of not more than 1000 g/mol, with at least one tertiary amino group and at least one hydroxyl group,
with the proviso that at least 10% of the isocyanate groups of component (a) are reacted with component (c1).

2. Addition compounds according to Claim 1, where Y contains, where appropriate, the heteroatoms O, S, Si and/or N and/or ether, urethane, carbonate, amide, siloxane and/or ester groups, and, where appropriate, hydrogen is replaced by halogen.

3. Addition compounds according to Claim 1 or 2, where Z has one or more of the following definitions: A) an aliphatic and/or cycloaliphatic group having at least one tertiary amino group, or B) a heterocyclic group having at least one basic ring nitrogen atom that does not contain a hydrogen atom, it being possible for the heterocyclic group to be attached to the group Q via an organic coupling group.

4. Addition compounds according to one or more of Claims 1 to 3, where at least two different compounds of the formula (Ia) are used.

5. Addition compounds and salts thereof according to one or more of Claims 1 to 4, **characterized in that** some of the monofunctional compounds of the formula (Ia) are monohydroxy-functional polyethers, polyesters, polyether-polyesters and/or aliphatic and/or cycloaliphatic monoalcohols having 2 to 30 carbon atoms, some of whose hydrogen atoms have been replaced by halogen and/or aryl radicals.

6. Addition compounds according to one or more of Claims 1 to 5, **characterized in that** di-, tri-or tetrahydroxy-functional polyethers, polyesters or polyether-polyesters are used as polyfunctional compounds of the formula (Ib).

7. Addition compounds according to one or more of Claims 1 to 6, **characterized in that** they contain no unsaturated groups.

8. Addition compounds according to one or more of Claims 1 to 7, **characterized in that** the polyisocyanates are products, containing one or more isocyanurate groups, of diisocyanates based on hexamethylene diisocyanate, diisophorone diisocyanate and/or tolylene diisocyanate.

9. Process for preparing the addition compounds according to one or more of Claims 1 to 8, which comprises reacting
(a) one or more polyisocyanates having at least two isocyanate groups per molecule with
(b1) one or more compounds of the formula (Ia)
Y-XH (Ia)
where
XH is a group that is reactive towards isocyanates and
Y is a monomeric or polymeric group that is not reactive towards isocyanates, that contains no tertiary amino groups and that comprises one or more aliphatic, cycloaliphatic and/or aromatic groups,
the compound of the general formula (Ia) possessing a number-average molar mass Mₙ of less than 20 000 g/mol and
at least 55 mol% of the compounds of the formula (Ia) possessing a number-average molecular weight Mₙ of 150 to 10 000 g/mol and which represent XH-functionalized polyalkylene oxides which contain 40 to 100 mol% of alkylene oxide units having at least three carbon atoms, based on the total amount of alkylene oxide units,
with the proviso that 20% to 90% of the isocyanate groups of component (a) are reacted with the compounds of the formula (Ia),
(b2) one or more compounds of the formula (Ib)
G-(XH)ₙ (Ib)
where XH is a group that is reactive towards isocyanates and n is 2 to 4 and G is an aliphatic, cycloaliphatic and/or aromatic group which contains at least 2 carbon atoms, has no tertiary amino groups and has a number-average molecular weight Mₙ of not more than 3000 g/mol, in an amount such that 0% to 60% of the isocyanate groups of the polyisocyanates originally used are reacted,
with the proviso that, as a result of the reactions (b1) and (b2), a total of at least 20% and not more than 90% of the isocyanate groups of the polyisocyanates originally used have undergone reaction,
(c1) one or more compounds of the general formula (IIa)
Z-Q (IIa)
in which Q is -NH₂, -NHR or OH, in which R is a linear or branched alkyl group having 1 to 18 carbon atoms, and
Z is an organic basic radical having at least one tertiary amino group and containing no isocyanate-reactive groups, and
(c2) optionally one or more compounds of the general formula (IIb)
M-Q (IIb)
in which Q is -NH₂, -NHR or OH, in which R is a linear or branched alkyl group having 1 to 18 carbon atoms, and
M is an organic radical having a number-average molar mass of not more than 1000 g/mol, with at least one tertiary amino group and at least one hydroxyl group,
with the proviso that at least 10% of the isocyanate groups of component (a) are reacted with component (c1).

10. Process for preparing an addition compound according to Claim 9, where first of all component (a) is reacted with component (b1) and, where appropriate, (b2), and then a reaction takes place with component (c1).

11. Process for preparing an addition compound according to either of Claims 9 and 10, where component (a) is reacted first with compounds of the general formula (Ia) and then with compounds of the general formula (Ib).

12. Use of one of the addition compounds from one or more of Claims 1 to 8 or prepared by one or more of the processes according to Claims 9 to 11 as a dispersant, dispersion stabilizer and/or wetting agent.

13. Use of one of the addition compounds from one or more of Claims 1 to 8 or prepared by one or more of the processes according to Claims 9 to 11 in the preparation or processing of paints, inks, including printing inks, paper coatings, leather and textile colours, pastes, pigment concentrates, ceramics, cosmetic preparations, casting compositions and/or moulding compositions based on synthetic, semi-synthetic or natural macromolecular substances.

14. Use of one of the addition compounds from one or more of Claims 1 to 8 or prepared by one or more of the processes according to Claims 9 to 11 for preparing pigment- and/or filler-comprising pigment concentrates, paints, pastes and/or moulding compositions.

15. Use of one of the addition compounds according to one or more of Claims 1 to 8 or prepared by one or more of the processes according to Claims 9 to 11 for coating solids in powder particle and/or fibre particle form.

16. Use of an addition compound according to Claim 15, the solids in powder particle and/or fibre particle form being dispersible pigments and/or fillers.

17. Use of one of the addition compounds according to one or more of Claims 1 to 8 or prepared by one or more of the processes according to Claims 9 to 11 for preparing a pigmented paint.

18. Use of an addition compound according to one or more of Claims 1 to 8 or prepared by one or more of the processes according to Claims 9 to 11 for producing a pigmented coating on a substrate, the addition compound being used to prepare a pigmented paint, the pigmented paint being applied to the substrate, and the pigmented paint applied to the substrate being baked or cured or crosslinked.

19. Solids in powder particle and/or fibre particle form, **characterized in that** they are coated with an addition compound according to one or more of Claims 1 to 8, or prepared by one or more of the processes according to Claims 9 to 11.

20. Solids in powder particle and/or fibre particle form according to Claim 19, the solids in powder particle and/or fibre particle form being pigments and/or fillers.

## Revendications

1. Composés d'addition et leurs sels, **caractérisés en ce que** les composés d'addition peuvent être obtenus en faisant réagir
(a) un ou plusieurs polyisocyanates avec au moins deux groupes d'isocyanate par molécule avec
(b1) un ou plusieurs composés de la formule (la)
Y-XH (Ia)
où
XH représente un groupe réactif aux isocyanates, et
Y représente un groupe monomérique ou polymérique non-réactif aux isocyanates qui ne contient pas des groupes d'amine tertiaire, et qui comprend un ou plusieurs groupes aliphatiques, cycloaliphatiques et/ou aromatiques,
ledit composé de la formule (la) ayant une masse molaire moyenne en nombre Mₙ inférieure à 20000 g/mol et
au moins 55 % en mole des composés de formule (la) ayant une masse molaire moyenne en nombre Mₙ de 150 à 10000 g/mol et qui représentent des polyalkylènoxides fonctionnalisés par XH, dont la teneur en unités d'oxyde d'alkylène avec au moins trois atomes de carbone est de 40 à 100 % en mole par rapport à la teneur totale en unités d'oxyde d'alkylène,
à condition que 20 % à 90 % des groupes isocyanate du composant (a) sont réagis avec les composés de la formule (la),
(b2) un ou plusieurs composés de la formule (Ib)
G-(XH)ₙ (Ib)
où
XH représente un groupe réactif aux isocyanates, et
n représente 2 à 4, et G représente un groupe aliphatique, cycloaliphatique et/ou aromatique contenant au moins 2 atomes de carbone qui ne contient pas des groupes d'amine tertiaire et présente une masse molaire moyenne en nombre Mₙ d'au plus 3000, en une quantité tant que 0 a 60 % des groupes isocyanate des polyisocyanates utilisés au départ sont réagis,
à condition qu'au moins 20 % et au plus 90 % des groupes isocyanate des polyisocyanates utilisés au départ sont réagis en totale par les réactions (b1) et (b2),
(c1) un ou plusieurs composés de formule générale (IIa)
Z-Q (IIa)
où Q représente -NH₂, -NHR ou OH, où R représente un groupe alkyle linéaire ou ramifié avec 1 à 18 atomes de carbone,
et
Z représente un groupement organique basique avec au moins un groupe d'amine tertiaire et qui ne contient pas des groupes réactifs avec isocyanate, et
(c2) optionnellement un ou plusieurs composés de formule générale (IIb)
M-Q (IIb)
où Q représente -NH₂, -NHR ou OH, où R représente un groupe alkyle linéaire ou ramifié avec 1 à 18 atomes de carbone,
et
M représente un groupement organique avec une masse molaire moyenne en nombre d'au plus 1000 g/mol avec au moins un groupe d'amine tertiaire et au moins un groupe hydroxyle,
à condition qu'au moins 10 % des groupes isocyanate du composant (a) sont réagis avec le composant (c1).

2. Composés d'addition selon la revendication 1, dans lesquels Y contient, le cas échéant, les hétéroatomes O, S, Si et/ou N et/ou des groupes éther, uréthane, carbonate, amide, siloxane et/ou ester, et l'hydrogène est substitué, le cas échéant, par des halogènes.

3. Composés d'addition selon la revendication 1 ou 2, dans lesquels Z a l'une ou plusieurs des significations suivantes : A) un groupe aliphatique et/ou cycloaliphatique avec au moins un groupe d'amine tertiaire ou B) un groupe hétérocyclique avec au moins un atome d'azote intracyclique basique qui ne comprend aucun atome d'hydrogène, le groupe hétérocyclique pouvant être lié au groupe Q par l'intermédiaire d'un groupe de couplage organique.

4. Composés d'addition selon une ou plusieurs des revendications 1 à 3, dans lesquels au moins deux composés différents de la formule générale (Ia) sont utilisés.

5. Composés d'addition et leurs sels selon une ou plusieurs des revendications 1 à 4, **caractérisés en ce qu'**une partie des composés monofonctionnels de la formule (la) sont des polyéthers, polyesters ou polyéther-polyesters monohydroxyfonctionnels et/ou des monoalcools aliphatiques et/ou cycloaliphatiques avec 2 à 30 atomes de carbone, dont les atomes de hydrogène peuvent être substitués en partie par des halogènes et/ou des groupements aryle.

6. Composés d'addition selon une ou plusieurs des revendications 1 à 5, **caractérisés en ce que** des polyéthers, polyesters ou polyéther-polyesters dihydroxyfonctionnels, trihydroxyfonctionnels ou tétrahydroxyfonctionnels sont utilisés en tant que composés polyfonctionnels de la formule (Ib).

7. Composés d'addition selon une ou plusieurs des revendications 1 à 6, **caractérisés en ce qu'**ils ne contiennent pas des groupes insaturés.

8. Composés d'addition selon une ou plusieurs des revendications 1 à 7, **caractérisés en ce que** les polyisocyanates sont des produits des diisocyanates à base de diisocyanate d'hexaméthylène, diisocyanate de diisophorone et/ou diisocyanate de toluylène, les produits contenant un ou plusieurs groupes isocyanurate.

9. Procédé pour la fabrication des composés d'addition selon une ou plusieurs des revendications 1 à 8, dans lequel on fait réagir
(a) un ou plusieurs polyisocyanates avec au moins deux groupes d'isocyanate par molécule avec
(b1) un ou plusieurs composés de la formule (la)
Y-XH (Ia)
où
XH représente un groupe réactif aux isocyanates, et
Y représente un group monomérique ou polymérique non-réactif aux isocyanates qui ne contient pas des groupes d'amine tertiaire, et qui comprend un ou plusieurs groupes aliphatiques, cycloaliphatiques et/ou aromatiques,
ledit composé de la formule (la) ayant une masse molaire moyenne en nombre Mₙ inférieure à 20000 g/mol et
au moins 55 % en mole des composés de formule (la) ayant une masse molaire moyenne en nombre Mₙ de 150 à 10000 g/mol et qui représentent des polyalkylènoxides fonctionnalisés par XH, dont la teneur en unités d'oxyde d'alkylène avec au moins trois atomes de carbone est de 40 à 100 % en mole par rapport à la teneur totale en unités d'oxyde d'alkylène,
à condition que 20 % à 90 % des groupes isocyanate du composant (a) sont réagis avec les composés de la formule (la),
(b2) un ou plusieurs composés de la formule (Ib)
G-(XH)ₙ (Ib)
où
XH représente un groupe réactif aux isocyanates, et
n représente 2 à 4, et G représente un groupe aliphatique, cycloaliphatique et/ou aromatique contenant au moins 2 atomes de carbone qui ne contient pas des groupes d'amine tertiaire et présente une masse molaire moyenne en nombre Mₙ d'au plus 3000, en une quantité tant que 0 a 60 % des groupes isocyanate des polyisocyanates utilisés au départ sont réagis,
à condition qu'au moins 20 % et au plus 90 % des groupes isocyanate des polyisocyanates utilisés au départ sont réagis en totale par les réactions (b1) in (b2),
(c1) un ou plusieurs composés de formule générale (IIa)
Z-Q (IIa)
où Q représente -NH₂, -NHR ou OH, où R représente un groupe alkyle linéaire ou ramifié avec 1 à 18 atomes de carbone,
et
Z représente un groupement organique basique avec au moins un groupe d'amine tertiaire et qui ne contient pas des groupes réactifs avec isocyanate, et
(c2) optionnellement un ou plusieurs composés de formule générale (IIb)
M-Q (IIb)
où Q représente -NH₂, -NHR ou OH, où R représente un groupe alkyle linéaire ou ramifié avec 1 à 18 atomes de carbone,
et
M représente un groupement organique avec une masse molaire moyenne en nombre d'au plus 1000 g/mol avec au moins un groupe d'amine tertiaire et au moins un groupe hydroxyle,
à condition qu'au moins 10 % des groupes isocyanate du composant (a) sont réagis avec le composant (c1).

10. Procédé pour la fabrication d'un composé d'addition selon la revendication 9, dans lequel premièrement le composant (a) est réagi avec le composant (b1) et, le cas échéant, le composant (b2), et ensuite s'effectue la réaction avec le composant (c1).

11. Procédé pour la fabrication d'un composé d'addition selon l'une quelconque des revendications 9 ou 10, dans lequel premièrement le composant (a) est réagi avec des composés de la formule générale (la), et ensuite avec des composés de la formule générale (Ib).

12. Utilisation d'un des composés d'addition d'une ou plusieurs des revendications 1 à 8 ou fabriqués selon un ou plusieurs des procédés selon les revendications 9 à 11 en tant qu'agents de dispersion, stabilisants de dispersion et/ou agents mouillants.

13. Utilisation d'un des composés d'une ou plusieurs des revendications 1 à 8 ou fabriqués selon un ou plusieurs des procédés selon les revendications 9 à 11, dans la fabrication ou le traitement des vernis, couleurs d'imprimerie, encres, couchage du papier, teintures de cuir et textiles, pâtes, concentrés de pigments, céramiques, préparations cosmétiques, masses de coulée et/ou masses de moulage à base des matières synthétiques, matières semi-synthétiques ou matières macromoléculaires naturelles.

14. Utilisation d'un des composés d'addition d'une ou plusieurs des revendications 1 à 8 ou fabriqués selon un ou plusieurs des procédés selon les revendications 9 à 11, pour la fabrication des concentrés de pigments, vernis, pâtes et/ou masses de moulage contenant des pigments et/ou matériaux de remplissage.

15. Utilisation d'un des composés d'addition selon une ou plusieurs des revendications 1 à 8 ou fabriqués selon un ou plusieurs des procédés selon les revendications 9 à 11, pour le revêtement des matières solides sous forme de particules pulvérulentes et/ou des particules fibreuses.

16. Utilisation d'un composé d'addition selon la revendication 15, les matières solides sous forme de particules pulvérulentes et/ou de particules fibreuses étant des pigments dispersables et/ou un matériau de remplissage.

17. Utilisation d'un des composés d'addition selon une ou plusieurs des revendications 1 à 8 ou fabriqués selon un ou plusieurs des procédés selon les revendications 9 à 11, pour la fabrication d'un vernis à pigments.

18. Utilisation d'un des composés d'addition selon une ou plusieurs des revendications 1 à 8 ou fabriqués selon un ou plusieurs des procédés selon les revendications 9 à 11, pour la fabrication d'un revêtement pigmenté sur un substrat, dans laquelle un vernis à pigments est fabriqué avec le composé d'addition, le vernis à pigments étant appliqué sur le substrat et le vernis à pigments appliqué sur le substrat étant recuit ou durci ou réticulé.

19. Matières solides sous forme de particules pulvérulentes et/ou de particules fibreuses, **caractérisées en ce qu'**elles sont fabriquées avec un composé d'addition selon une ou plusieurs des revendications 1 à 8 ou revêtues selon un ou plusieurs procédés selon les revendications 9 à 11.

20. Matières solides sous forme de particules pulvérulentes et/ou de particules fibreuses selon la revendication 19, les matières solides sous forme de particules pulvérulentes et/ou de particules fibreuses étant des pigments et/ou des matériaux de remplissage.
